(19) Europäisches Patentamt
European Patent Office
Office européen des brevets

(11) **EP 3 447 933 B1**

(12) # EUROPEAN PATENT SPECIFICATION

(45) Date of publication and mention
of the grant of the patent:
**04.11.2020  Bulletin 2020/45**

(21) Application number: **16909181.6**

(22) Date of filing: **20.07.2016**

(51) Int Cl.:
*H04B 7/04* (2017.01)          *H04B 7/08* (2006.01)
*H04B 7/06* (2006.01)          *H04L 1/06* (2006.01)
*H04B 7/0413* (2017.01)

(86) International application number:
**PCT/CN2016/090691**

(87) International publication number:
**WO 2018/014253 (25.01.2018 Gazette 2018/04)**

(54) **SIGNAL DECODING METHOD, APPARATUS AND DEVICE**

SIGNALDECODIERUNGSVERFAHREN, -VORRICHTUNG UND -EINRICHTUNG

PROCÉDÉ, APPAREIL ET DISPOSITIF DE DÉCODAGE DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.02.2019  Bulletin 2019/09**

(73) Proprietor: **Huawei Technologies Co., Ltd.
Longgang District
Shenzhen, Guangdong 518129 (CN)**

(72) Inventors:
• **CHEN, Zihuan
Shenzhen
Guangdong 518129 (CN)**
• **TIAN, Dafeng
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 1 864 382          CN-A- 101 039 136
CN-A- 101 043 297        CN-A- 101 437 007
CN-A- 101 488 775        US-A1- 2007 098 092
US-B1- 8 416 841

• SIAVASH M ALAMOUTI: "A Simple Transmit
Diversity Technique for Wireless
Communications", IEEE JOURNAL ON
SELECTED AREAS IN COMMUNICATIONS, IEEE
SERVICE CENTER, PISCATAWAY, US, vol. 16,
no. 8, 1 October 1998 (1998-10-01), XP011054845,
ISSN: 0733-8716

EP 3 447 933 B1

**Description**

**TECHNICAL FIELD**

The present invention relates to the communications field, and in particular, to a signal decoding method, apparatus, and device.

**BACKGROUND**

In the field of wireless communications, a multiple-input multiple-output (Multiple-Input Multiple-Output, MIMO) technology is widely applied at present. The MIMO technology means that a plurality of antennas are used at both a transmit end and a receive end of signals, and signals are transmitted and received by using the plurality of antennas at the transmit end and the receive end, so as to improve communication quality.

To further increase a gain of a MIMO system, a space-time coding technology emerges, to be specific, signal coding is performed in two dimensions: spatial domain and time domain, so that spatial diversity of a plurality of antennas is used in space to increase a system gain.

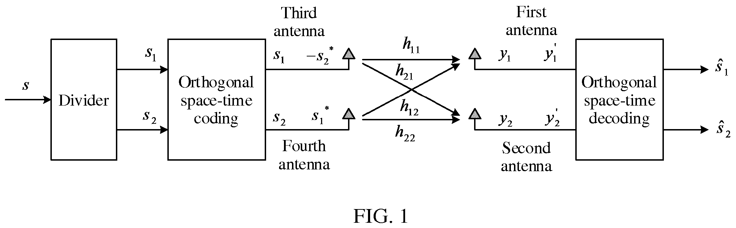

Currently, a relatively mature space-time coding technology includes an Alamouti coding scheme. FIG. 1 is an architectural diagram of an Alamouti space-time coding scheme. In this scheme, a signal transmit end has two antennas: a first antenna and a second antenna, and a signal receive end also has two antennas: a third antenna and a fourth antenna. Two different signals are obtained after serial-to-parallel conversion is performed on a signal $s$, and are a transmit signal $s_1$ and a transmit signal $s_2$. After orthogonal space-time coding, in a first timeslot, the third antenna transmits the signal $s_1$, and the fourth antenna transmits the signal $s_2$; in a second timeslot, the third antenna transmits a signal $-s_2^*$, and the fourth antenna transmits a signal $s_1^*$ ("*" represents a conjugate complex number). At the signal receive end, in the first timeslot, the first antenna receives a signal $y_1$, and the second antenna receives a signal $y_2$; in the second timeslot, the first antenna receives a signal $y_1'$, and the second antenna receives a signal $y_2'$. After the first antenna and the second antenna separately receive signals in the two timeslots, a decoded signal $\hat{s}_1$ and a decoded signal $\hat{s}_2$ are obtained through orthogonal space-time decoding.

A phase noise (Phase Noise) means that a phase of an output signal randomly changes due to various noises at the transmit end of a signal. A longer wavelength and a lower frequency of a radio wave lead to a lower phase noise; otherwise, a shorter wavelength and a higher frequency of a radio wave lead to a higher phase noise. The Alamouti coding scheme is mainly pertinent to a radio wave with a relatively long wavelength and a relatively low frequency, for example, a long wave (with a wavelength of 1 km to 10 km and a frequency range of 30 KHz to 300 KHz) and a medium wave (with a wavelength range of 100 m to 1000 m and a frequency range of 300 KHz to 3000 KHz). Because a phase noise is very low and therefore can be ignored, the decoded signal $\hat{s}_1$ obtained by the signal receive end through decoding is related only to the transmit signal $s_1$ and is unrelated to the transmit signal $s_2$. The decoded signal $\hat{s}_2$ obtained through decoding is related only to the transmit signal $s_2$ and is unrelated to the transmit signal $s_2$. A decoding result is good. However, for a radio wave with a relatively short wavelength and a relatively high frequency, for example, a microwave (with a wavelength range of 0.1 mm to 10 dm and a frequency range of 3000 MHz to 3000 GHz), a phase noise is usually high. Consequently, the decoded signal $\hat{s}_1$ obtained by the signal receive end through decoding is related to both the transmit signal $s_1$ and the transmit signal $s_2$, to be specific, the transmit signal $s_2$ causes interference to the transmit signal $s_1$. The decoded signal $\hat{s}_2$ is related to both the transmit signal $s_2$ and the transmit signal $s_1$, to be specific, the transmit signal $s_1$ causes interference to the transmit signal $s_2$. A decoding result is relatively poor. Therefore, there is an urgent need for a method that can be applied to decode a radio wave with a relatively short wavelength and a relatively high frequency, to improve decoding performance.

S. M. Alamouti, "A Simple Transmit Diversity Technique for Wireless Communications", IEEE Journal on selected areas in communications, vol. 16, no. 8, 01-Oct-1998, p. 1454-1455 describes a two-branch transmit diversity scheme. Using two transmit antennas and one receive antenna the scheme provides the same diversity order as maximal-ratio receiver combining (MRRC) with one transmit antenna, and two receive antennas. The scheme can be generalized to two transmit antennas and M receive antennas to provide a diversity order of 2M.

US 2007/0098092 A1 describes a technique for generating common phase error (CPE) estimates in a multicarrier receiver. The CPE estimates are generated for each channel between two or more transmit antennas and the multicarrier receiver.

## SUMMARY

To resolve the foregoing technical problem, embodiments of the present invention provide a signal decoding method, apparatus, and device, so that a good decoding result can be obtained even if phase noises exist at a signal transmit end and a signal receive end in a 2×2 MIMO system.

An embodiment of the present invention provides a signal decoding method, where the method is applied to a MIMO system, the MIMO system includes a signal transmit end and a signal receive end, the signal receive end includes a first antenna and a second antenna, and the signal transmit end includes a third antenna and a fourth antenna; and the method includes:

> obtaining a first signal received by the first antenna and a second signal received by the second antenna, where the first signal and the second signal are from the third antenna and the fourth antenna of the signal transmit end;
> calculating a decoding coefficient by using a channel fading coefficient and a phase noise coefficient that are obtained by performing channel estimation based on the first signal and the second signal, where the channel fading coefficient includes channel fading coefficients respectively corresponding to four channels formed between the first antenna, the second antenna, the third antenna, and the fourth antenna, and the phase noise coefficient includes a phase noise coefficient of the signal transmit end and a phase noise coefficient of the signal receive end; and
> decoding the first signal and the second signal by using the decoding coefficient, to respectively obtain a first decoded signal and a second decoded signal, where the first decoded signal is related only to a transmit signal corresponding to the third antenna and is unrelated to a transmit signal corresponding to the fourth antenna, the second decoded signal is related only to the transmit signal corresponding to the fourth antenna and is unrelated to the transmit signal corresponding to the third antenna, and the transmit signal is a signal before encoding;
> wherein the calculating a decoding coefficient by using a channel fading coefficient and a phase noise coefficient that are obtained by performing channel estimation based on the first signal and the second signal includes:
>
>> calculating an equalization coefficient by using the channel fading coefficient obtained by performing channel estimation for a first time based on the first signal and the second signal;
>> performing equalization processing on the first signal and the second signal by using the equalization coefficient; and
>
> calculating the decoding coefficient by using the phase noise coefficient obtained by performing channel estimation for a second time on a signal obtained after equalization processing, wherein the performing channel estimation for a first time for obtaining the channel fading coefficient is performed at a longer interval than the performing channel estimation for a second time for obtaining the phase noise coefficient.

Preferably, the first signal and the second signal correspond to a same timeslot, and the timeslot includes a first timeslot and a second timeslot;
the calculating an equalization coefficient by using the channel fading coefficient obtained by performing channel estimation based on the first signal and the second signal includes:

> calculating a first group of equalization coefficients and a second group of equalization coefficients by using the channel fading coefficient obtained by performing channel estimation based on the first signal and the second signal; and
> the performing equalization processing on the first signal and the second signal by using the equalization coefficient includes:
>
>> preprocessing the first signal and the second signal to obtain a first group of four signals and a second group of four signals, where the first group of four signals and the second group of four signals each include the first timeslot of the first signal, a conjugate of the second timeslot of the first signal, the first timeslot of the second signal, and a conjugate of the second timeslot of the second signal;
>> filtering the first group of four signals by using the first group of equalization coefficients to obtain a third signal and a fourth signal, where the third signal and the fourth signal each correspond to the timeslot; and
>> filtering the second group of four signals by using the second group of equalization coefficients to obtain a fifth signal and a sixth signal, where the fifth signal and the sixth signal each correspond to the timeslot.

Preferably, the first group of equalization coefficients include a first equalization coefficient, a second equalization coefficient, a third equalization coefficient, and a fourth equalization coefficient; and
the filtering the first group of four signals by using the first group of equalization coefficients to obtain a third signal and a fourth signal includes:

filtering the first timeslot of the first signal by using the first equalization coefficient, to obtain the first timeslot of the third signal;

filtering the conjugate of the second timeslot of the first signal by using the second equalization coefficient, to obtain the second timeslot of the third signal;

filtering the first timeslot of the second signal by using the third equalization coefficient, to obtain the first timeslot of the fourth signal; and

filtering the conjugate of the second timeslot of the second signal by using the fourth equalization coefficient, to obtain the second timeslot of the fourth signal.

Preferably, the first equalization coefficient $W_{11} = \dfrac{1}{h_{11}}$, the second equalization coefficient $W_{12} = \dfrac{1}{h_{12}^*}$, the third equalization coefficient $W_{13} = \dfrac{1}{h_{21}}$, and the fourth equalization coefficient $W_{14} = \dfrac{1}{h_{22}^*}$, where

$h_{11}$ is a channel fading coefficient from the third antenna to the first antenna, $h_{12}^*$ is a conjugate of $h_{12}$, $h_{12}$ is a channel fading coefficient from the fourth antenna to the first antenna, $h_{21}$ is a channel fading coefficient from the third antenna to the second antenna, $h_{22}^*$ is a conjugate of $h_{22}$, and $h_{22}$ is a channel fading coefficient from the fourth antenna to the second antenna.

Preferably, the second group of equalization coefficients include a fifth equalization coefficient, a sixth equalization coefficient, a seventh equalization coefficient, and an eighth equalization coefficient; and

the filtering the second group of four signals by using the second group of equalization coefficients to obtain a fifth signal and a sixth signal includes:

filtering the first timeslot of the first signal by using the fifth equalization coefficient, to obtain the first timeslot of the fifth signal;

filtering the conjugate of the second timeslot of the first signal by using the sixth equalization coefficient, to obtain the second timeslot of the fifth signal;

filtering the first timeslot of the second signal by using the seventh equalization coefficient, to obtain the first timeslot of the sixth signal; and

filtering the conjugate of the second timeslot of the second signal by using the eighth equalization coefficient, to obtain the second timeslot of the sixth signal.

Preferably, the fifth equalization coefficient $W_{21} = \dfrac{1}{h_{12}}$, the sixth equalization coefficient $W_{22} = \dfrac{-1}{h_{11}^*}$, the seventh equalization coefficient $W_{23} = \dfrac{1}{h_{22}}$, and the eighth equalization coefficient $W_{24} = \dfrac{-1}{h_{21}^*}$, where

$h_{12}$ is a channel fading coefficient from the fourth antenna to the first antenna, $h_{11}^*$ is a conjugate of $h_{11}$, $h_{11}$ is a channel fading coefficient from the third antenna to the first antenna, $h_{22}$ is a channel fading coefficient from the fourth antenna to the second antenna, $h_{21}^*$ is a conjugate of $h_{21}$, and $h_{21}$ is a channel fading coefficient from the third antenna to the second antenna.

Preferably, the calculating the decoding coefficient by using the phase noise coefficient obtained by performing channel estimation on a signal obtained after equalization processing includes:

calculating a first group of decoding coefficients by using a first group of phase noise coefficients obtained by performing channel estimation based on the third signal and the fourth signal; and

calculating a second group of decoding coefficients by using a second group of phase noise coefficients obtained by performing channel estimation based on the fifth signal and the sixth signal; and

the decoding the first signal and the second signal by using the decoding coefficient, to respectively obtain a first decoded signal and a second decoded signal includes:

decoding the third signal and the fourth signal by using the first group of decoding coefficients, to obtain the first decoded signal; and

decoding the fifth signal and the sixth signal by using the second group of decoding coefficients, to obtain the second decoded signal.

Preferably, the first group of decoding coefficients include a first decoding coefficient, a second decoding coefficient, a third decoding coefficient, and a fourth decoding coefficient; and

the decoding the third signal and the fourth signal by using the first group of decoding coefficients, to obtain the first decoded signal includes:

multiplying the first timeslot of the third signal and the first decoding coefficient, multiplying the second timeslot of the third signal and the second decoding coefficient, multiplying the first timeslot of the fourth signal and the third decoding coefficient, multiplying the second timeslot of the fourth signal and the fourth decoding coefficient, and adding multiplying results to each other to obtain the first decoded signal.

Preferably, the first decoding coefficient $w_{11} = e^{-j\phi'_{11}}$, the second decoding coefficient $w_{12} = \alpha^2 e^{j\phi_{12}}$, the third decoding coefficient $w_{13} = \beta^2 e^{-j\phi'_{21}}$, and the fourth decoding coefficient $w_{14} = e^{j\phi_{22}}$ ; or

the first decoding coefficient $w_{11} = -\dfrac{1}{\alpha} e^{-j\phi'_{11}}$, the second decoding coefficient $w_{12} = -\alpha e^{j\phi_{12}}$, the third decoding coefficient $w_{13} = -\beta e^{-j\phi'_{21}}$, and the fourth decoding coefficient $w_{14} = -\dfrac{1}{\beta} e^{j\phi_{22}}$ ; or

the first decoding coefficient $w_{11} = \dfrac{e^{j(-\phi'_{11})}}{e^{j(\phi_{11}-\phi'_{11})} + \alpha^2 e^{j(\phi_{12}-\phi'_{12})}}$, the second decoding coefficient $w_{12} = \dfrac{\alpha^2 e^{j(\phi_{12})}}{e^{j(\phi_{11}-\phi'_{11})} + \alpha^2 e^{j(\phi_{12}-\phi'_{12})}}$, the third decoding coefficient $w_{13} = \dfrac{\beta^2 e^{-j\phi'_{21}}}{\beta^2 e^{j(\phi_{21}-\phi'_{21})} + e^{j(\phi_{22}-\phi'_{22})}}$, and the fourth decoding coefficient $w_{14} = \dfrac{e^{j\phi_{22}}}{\beta^2 e^{j(\phi_{21}-\phi'_{21})} + e^{j(\phi_{22}-\phi'_{22})}}$, where

$\phi_{11} = \varphi_{tx1} + \varphi_{rx1}$, $\phi_{12} = \varphi_{tx2} + \varphi_{rx1}$, $\phi'_{11} = \varphi'_{tx1} + \varphi'_{rx1}$, $\phi'_{12} = \varphi'_{tx2} + \varphi'_{rx1}$, $\phi_{21} = \varphi_{tx1} + \varphi_{rx2}$, $\phi_{22} = \varphi_{tx2} + \varphi_{rx2}$, $\phi'_{21} = \varphi'_{tx1} + \varphi'_{rx2}$, $\phi'_{22} = \varphi'_{tx2} + \varphi'_{rx2}$, $\varphi_{rx1}$ is a phase noise coefficient corresponding to the first timeslot of the first signal, $\varphi'_{rx1}$ is a phase noise coefficient corresponding to the second timeslot of the first signal, $\varphi_{rx2}$ is a phase noise coefficient corresponding to the first timeslot of the second signal, $\varphi'_{rx2}$ is a phase noise coefficient corresponding to the second timeslot of the second signal, $\varphi_{tx1}$ is a phase noise coefficient corresponding to the first timeslot of a first transmitted signal, $\varphi'_{tx1}$ is a phase noise coefficient corresponding to the second timeslot of the first transmitted signal, $\varphi_{tx2}$ is a phase noise coefficient corresponding to the first timeslot of a second transmitted signal, $\varphi'_{tx2}$ is a phase noise coefficient corresponding to the second timeslot of the second transmitted signal, $\varphi_{tx1}$ is a phase noise of the third antenna, $\varphi_{tx2}$ is a phase noise of the fourth antenna, $\varphi_{rx1}$ is a phase noise of the first antenna, $\varphi_{rx2}$ is a phase noise of the second antenna, the first transmitted signal is a signal transmitted by the third antenna, the second transmitted signal is a signal transmitted by the fourth antenna, the first transmitted signal is a signal transmitted by the third antenna, the second transmitted signal is a signal transmitted by the fourth antenna, the first transmitted signal and the second transmitted signal are signals obtained after encoding, $\alpha$ is a ratio of the channel fading coefficient from the third antenna to the first antenna to the channel fading coefficient from the fourth antenna to the first antenna, and $\beta$ is a ratio of the channel fading coefficient from the third antenna to the second antenna to the channel fading coefficient from the fourth antenna to the second antenna.

Preferably, the second group of decoding coefficients include a fifth decoding coefficient, a sixth decoding coefficient, a seventh decoding coefficient, and an eighth decoding coefficient; and
the decoding the fifth signal and the sixth signal by using the second group of decoding coefficients, to obtain the second decoded signal includes:
multiplying the first timeslot of the fifth signal and the fifth decoding coefficient, multiplying the second timeslot of the fifth signal and the sixth decoding coefficient, multiplying the first timeslot of the sixth signal and the seventh decoding coefficient, multiplying the second timeslot of the sixth signal and the eighth decoding coefficient, and adding multiplying results to each other to obtain the second decoded signal.

Preferably, the fifth decoding coefficient $w_{21}= \alpha^2 e^{-j\phi'_{12}}$, the sixth decoding coefficient $w_{22}= e^{j\phi_{12}}$, the seventh decoding coefficient $w_{23}= e^{-j\phi'_{12}}$, and the eighth decoding coefficient $w_{24}= \beta^2 e^{j\phi_{12}}$ ; or

the fifth decoding coefficient $w_{21}=\alpha e^{-j\phi'_{12}}$, the sixth decoding coefficient

$$w_{22}= \frac{1}{\alpha} e^{j\phi_{11}}$$

, the seventh decoding coefficient

$$w_{23}= \frac{1}{\beta} e^{-j\phi'_{22}}$$

, and the eighth decoding coefficient $w_{24}=\beta e^{j\phi_{12}}$ ; or

the fifth decoding coefficient

$$w_{21} = \frac{\alpha^2 e^{-j\phi'_{12}}}{e^{j(\phi_{11}-\phi'_{11})} + \alpha^2 e^{j(\phi_{12}-\phi'_{12})}}$$

, the sixth decoding coefficient

$$w_{22} = \frac{e^{j\phi_{11}}}{e^{j(\phi_{11}-\phi'_{11})} + \alpha^2 e^{j(\phi_{12}-\phi'_{12})}}$$

, the seventh decoding coefficient

$$w_{23} = \frac{e^{-j\phi'_{22}}}{\beta^2 e^{j(\phi_{21}-\phi'_{21})} + e^{j(\phi_{22}-\phi'_{22})}}$$

, and the

eighth decoding coefficient

$$w_{24} = \frac{\beta^2 e^{j\varphi_{21}}}{\beta^2 e^{j(\varphi_{21}-\varphi'_{21})} + e^{j(\varphi_{22}-\varphi_{22})}}$$

, where

$$\varphi'_{11} = \varphi'_{tx1} + \varphi'_{rx1}$$ , $$\varphi'_{12} = \varphi'_{tx2} + \varphi'_{rx1}$$ , $\varphi_{21} = \varphi_{tx1} + \varphi_{rx2}$, $\varphi_{22} = \varphi_{tx2}$

$\varphi_{11} = \varphi_{tx1} + \varphi_{rx1}$, $\varphi_{12} = \varphi_{tx2} + \varphi_{rx1}$,

$+ \varphi_{rx2}$, $\varphi'_{21} = \varphi'_{tx1} + \varphi'_{rx2}$, $$\varphi'_{22} = \varphi'_{tx2} + \varphi'_{rx2}$$ , $\varphi_{rx1}$ is a phase noise coefficient corresponding to the first timeslot of the first signal, $\varphi'_{rx1}$ is a phase noise coefficient corresponding to the second timeslot of the first signal, $\varphi_{rx2}$ is a phase noise coefficient corresponding to the first timeslot of the second signal, $\varphi'_{rx2}$ is a phase noise coefficient corresponding to the second timeslot of the second signal, $\varphi_{tx1}$ is a phase noise coefficient corresponding to the first timeslot of a first transmitted signal, $\varphi'_{tx1}$ is a phase noise coefficient corresponding to the second timeslot of the first transmitted signal, $\varphi_{tx2}$ is a phase noise coefficient corresponding to the first timeslot of a second transmitted signal, $\varphi'_{tx2}$ is a phase noise coefficient corresponding to the second timeslot of the second transmitted signal, $\varphi_{tx1}$ is a phase noise of the third antenna, $\varphi_{tx2}$ is a phase noise of the fourth antenna, $\varphi_{rx1}$ is a phase noise of the first antenna, $\varphi_{rx2}$ is a phase noise of the second antenna, the first transmitted signal is a signal transmitted by the third antenna, the second transmitted signal is a signal transmitted by the fourth antenna, the first transmitted signal is a signal transmitted by the third antenna, the second transmitted signal is a signal transmitted by the fourth antenna, the first transmitted signal and the second transmitted signal are signals obtained after encoding, $\alpha$ is a ratio of the channel fading coefficient from the third antenna to the first antenna to the channel fading coefficient from the fourth antenna to the first antenna, and $\beta$ is a ratio of the channel fading coefficient from the third antenna to the second antenna to the channel fading coefficient from the fourth antenna to the second antenna.

Preferably, the performing equalization processing on the first signal and the second signal by using the equalization coefficient includes:
in time domain, performing equalization processing on the first signal and the second signal by using the equalization coefficient.

Preferably, the performing equalization processing on the first signal and the second signal by using the equalization coefficient includes:

in frequency domain, performing equalization processing on the first signal and the second signal by using the equalization coefficient.

An embodiment of the present invention provides a signal decoding apparatus, where the apparatus is applied to a MIMO system, the MIMO system includes a signal transmit end and a signal receive end, the signal receive end includes a first antenna and a second antenna, and the signal transmit end includes a third antenna and a fourth antenna; and

the apparatus includes:

a signal obtaining unit, a decoding coefficient calculation unit, and a decoding unit, where
the signal obtaining unit is configured to obtain a first signal received by the first antenna and a second signal received by the second antenna, where the first signal and the second signal are from the third antenna and the fourth antenna of the signal transmit end;
the decoding coefficient calculation unit is configured to calculate a decoding coefficient by using a channel fading coefficient and a phase noise coefficient that are obtained by performing channel estimation based on the first signal and the second signal, where the channel fading coefficient includes channel fading coefficients respectively corresponding to four channels formed between the first antenna, the second antenna, the third antenna, and the fourth antenna, and the phase noise coefficient includes a phase noise coefficient of the signal transmit end and a phase noise coefficient of the signal receive end; and
the decoding unit is configured to decode the first signal and the second signal by using the decoding coefficient, to respectively obtain a first decoded signal and a second decoded signal, where the first decoded signal is related only to a transmit signal corresponding to the third antenna and is unrelated to a transmit signal corresponding to the fourth antenna, the second decoded signal is related only to the transmit signal corresponding to the fourth antenna and is unrelated to the transmit signal corresponding to the third antenna, and the transmit signal is a signal before encoding;

wherein the decoding coefficient calculation unit specifically includes:

an equalization coefficient calculation unit, an equalization unit, and a decoding coefficient calculation subunit, where
the equalization coefficient calculation unit is configured to calculate an equalization coefficient by using the channel fading coefficient obtained by performing channel estimation for a first time based on the first signal and the second signal;
the equalization unit is configured to perform equalization processing on the first signal and the second signal by using the equalization coefficient; and
the decoding coefficient calculation subunit is configured to calculate the decoding coefficient by using the phase noise coefficient obtained by performing channel estimation for a second time on a signal obtained after equalization processing, wherein the performing channel estimation for a first time for obtaining the channel fading coefficient is performed at a longer interval than the performing channel estimation for a second time for obtaining the phase noise coefficient.

Preferably, the first signal and the second signal correspond to a same timeslot, and the timeslot includes a first timeslot and a second timeslot;

the equalization coefficient calculation unit is specifically configured to calculate a first group of equalization coefficients and a second group of equalization coefficients by using the channel fading coefficient obtained by performing channel estimation based on the first signal and the second signal; and

the equalization unit specifically includes a preprocessing unit and a filter unit, and the filter unit includes a first filter unit and a second filter unit, where

the preprocessing unit is configured to preprocess the first signal and the second signal to obtain a first group of four signals and a second group of four signals, where the first group of four signals and the second group of four signals each include the first timeslot of the first signal, a conjugate of the second timeslot of the first signal, the first timeslot of the second signal, and a conjugate of the second timeslot of the second signal;

the first filter unit is configured to filter the first group of four signals by using the first group of equalization coefficients to obtain a third signal and a fourth signal, where the third signal and the fourth signal each correspond to the timeslot; and

the second filter unit is configured to filter the second group of four signals by using the second group of equalization coefficients to obtain a fifth signal and a sixth signal, where the fifth signal and the sixth signal each correspond to the timeslot.

Preferably, the first group of equalization coefficients include a first equalization coefficient, a second equalization coefficient, a third equalization coefficient, and a fourth equalization coefficient; and
the first filter unit is specifically configured to:

filter the first timeslot of the first signal by using the first equalization coefficient, to obtain the first timeslot of the third signal;
filter the conjugate of the second timeslot of the first signal by using the second equalization coefficient, to obtain the second timeslot of the third signal;
filter the first timeslot of the second signal by using the third equalization coefficient, to obtain the first timeslot of the fourth signal; and
filter the conjugate of the second timeslot of the second signal by using the fourth equalization coefficient, to obtain the second timeslot of the fourth signal.

$$W_{11} = \frac{1}{h_{11}}$$

$$W_{12} = \frac{1}{h_{12}^*}$$

Preferably, the first equalization coefficient ⎯⎯, the second equalization coefficient ⎯⎯, the

$$W_{13} = \frac{1}{h_{21}}$$

$$W_{14} = \frac{1}{h_{22}^*}$$

third equalization coefficient ⎯⎯, and the fourth equalization coefficient ⎯⎯, where

$h_{11}$ is a channel fading coefficient from the third antenna to the first antenna, $h_{12}^*$ is a conjugate of $h_{12}$, $h_{12}$ is a channel fading coefficient from the fourth antenna to the first antenna, $h_{21}$ is a channel fading coefficient from the third antenna to the second antenna, $h_{22}^*$ is a conjugate of $h_{22}$, and $h_{22}$ is a channel fading coefficient from the fourth antenna to the second antenna.

Preferably, the second group of equalization coefficients include a fifth equalization coefficient, a sixth equalization coefficient, a seventh equalization coefficient, and an eighth equalization coefficient; and
the second filter unit is specifically configured to:

filter the first timeslot of the first signal by using the fifth equalization coefficient, to obtain the first timeslot of the fifth signal;
filter the conjugate of the second timeslot of the first signal by using the sixth equalization coefficient, to obtain the second timeslot of the fifth signal;
filter the first timeslot of the second signal by using the seventh equalization coefficient, to obtain the first timeslot of the sixth signal; and
filter the conjugate of the second timeslot of the second signal by using the eighth equalization coefficient, to obtain the second timeslot of the sixth signal.

$$W_{21} = \frac{1}{h_{12}}$$

$$W_{22} = \frac{-1}{h_{11}^*}$$

Preferably, the fifth equalization coefficient ⎯⎯, the sixth equalization coefficient ⎯⎯, the

$$W_{23} = \frac{1}{h_{22}}$$

$$W_{24} = \frac{-1}{h_{21}^*}$$

seventh equalization coefficient ⎯⎯, and the eighth equalization coefficient ⎯⎯, where

$h_{12}$ is a channel fading coefficient from the fourth antenna to the first antenna, $h_{11}^*$ is a conjugate of $h_{11}$, $h_{11}$ is a channel fading coefficient from the third antenna to the first antenna, $h_{22}$ is a channel fading coefficient from the fourth antenna to the second antenna, $h_{21}^*$ is a conjugate of $h_{21}$, and $h_{21}$ is a channel fading coefficient from the third antenna to the second antenna.

Preferably, the decoding coefficient calculation subunit is specifically configured to:

calculate a first group of decoding coefficients by using a first group of phase noise coefficients obtained by performing channel estimation based on the third signal and the fourth signal; and
calculate a second group of decoding coefficients by using a second group of phase noise coefficients obtained by performing channel estimation based on the fifth signal and the sixth signal; and
the decoding unit includes a first decoding unit and a second decoding unit, where
the first decoding unit is configured to:

decode the third signal and the fourth signal by using the first group of decoding coefficients, to obtain the first decoded signal; and
the second decoding unit is configured to:
decode the fifth signal and the sixth signal by using the second group of decoding coefficients, to obtain the second decoded signal.

Preferably, the first group of decoding coefficients include a first decoding coefficient, a second decoding coefficient, a third decoding coefficient, and a fourth decoding coefficient; and
the first decoding unit is specifically configured to:
multiply the first timeslot of the third signal and the first decoding coefficient, multiply the second timeslot of the third signal and the second decoding coefficient, multiply the first timeslot of the fourth signal and the third decoding coefficient, multiply the second timeslot of the fourth signal and the fourth decoding coefficient, and add multiplying results to each other to obtain the first decoded signal.

Preferably, the first decoding coefficient $w_{11} = e^{-j\phi'_{11}}$, the second decoding coefficient $w_{12} = \alpha^2 e^{j\phi_{12}}$, the third decoding coefficient $w_{13} = \beta^2 e^{-j\phi'_{21}}$, and the fourth decoding coefficient $w_{14} = e^{j\phi_{22}}$ ; or

the first decoding coefficient $w_{11} = -\dfrac{1}{\alpha} e^{-j\varphi'_{11}}$, the second decoding coefficient $w_{12} = -\alpha e^{j\phi_{12}}$, the third decoding coefficient $w_{13} = -\beta e^{-j\phi'_{21}}$, and the fourth decoding coefficient $w_{14} = -\dfrac{1}{\beta} e^{j\phi_{22}}$ ; or

the first decoding coefficient $w_{11} = \dfrac{e^{j(-\phi'_{11})}}{e^{j(\phi_{11}-\phi'_{11})} + \alpha^2 e^{j(\phi_{12}-\phi'_{12})}}$, the second decoding coefficient

$w_{12} = \dfrac{\alpha^2 e^{j(\phi_{12})}}{e^{j(\phi_{11}-\phi'_{11})} + \alpha^2 e^{j(\phi_{12}-\phi'_{12})}}$, the third decoding coefficient $w_{13} = \dfrac{\beta^2 e^{-j\phi'_{21}}}{\beta^2 e^{j(\phi_{21}-\phi'_{21})} + e^{j(\phi_{22}-\phi'_{22})}}$, and the fourth

decoding coefficient $w_{14} = \dfrac{e^{j\phi_{22}}}{\beta^2 e^{j(\phi_{21}-\phi'_{21})} + e^{j(\phi_{22}-\phi'_{22})}}$, where

$\varphi'_{11} = \varphi'_{tx1} + \varphi'_{rx1}$, $\varphi'_{12} = \varphi'_{tx2} + \varphi'_{rx1}$, $\varphi_{11} = \varphi_{tx1} + \varphi_{rx1}$, $\varphi_{12} = \varphi_{tx2} + \varphi_{rx1}$, $\varphi_{21} = \varphi_{tx1} + \varphi_{rx2}$, $\varphi_{22} = \varphi_{tx2}$

$+ \varphi_{rx2}$, $\varphi'_{21} = \varphi'_{tx1} + \varphi'_{rx2}$, $\varphi'_{22} = \varphi'_{tx2} + \varphi'_{rx2}$, $\varphi_{rx1}$ is a phase noise coefficient corresponding to the first timeslot of the first signal, $\varphi'_{rx1}$ is a phase noise coefficient corresponding to the second timeslot of the first signal, $\varphi_{rx2}$ is a phase noise coefficient corresponding to the first timeslot of the second signal, $\varphi'_{rx2}$ is a phase noise coefficient corresponding to the second timeslot of the second signal, $\varphi_{tx1}$ is a phase noise coefficient corresponding to the first timeslot of a first transmitted signal, $\varphi'_{tx1}$ is a phase noise coefficient corresponding to the second timeslot of the first transmitted signal, $\varphi_{tx2}$ is a phase noise coefficient corresponding to the first timeslot of a second transmitted signal, $\varphi'_{tx2}$ is a phase noise coefficient corresponding to the second timeslot of the second transmitted signal, $\varphi_{tx1}$ is a phase noise of the third antenna, $\varphi_{tx2}$ is a phase noise of the fourth antenna, $\varphi_{rx1}$ is a phase noise of the first antenna, $\varphi_{rx2}$ is a phase noise of the second antenna, the first transmitted signal is a signal transmitted by the third antenna, the second transmitted signal is a signal transmitted by the fourth antenna, the first transmitted signal is a signal transmitted by the third antenna, the second transmitted signal is a signal transmitted by the fourth antenna, the first transmitted signal and the second transmitted signal are signals obtained after encoding, $\alpha$ is a ratio of the channel fading coefficient from the third antenna to the first antenna to the channel fading coefficient from the fourth antenna to the first antenna, and $\beta$ is a ratio of the channel fading coefficient from the third antenna to the second antenna to the channel fading coefficient from the fourth antenna to the second antenna.

Preferably, the second group of decoding coefficients include a fifth decoding coefficient, a sixth decoding coefficient, a seventh decoding coefficient, and an eighth decoding coefficient; and

the second decoding unit is specifically configured to:

multiply the first timeslot of the fifth signal and the fifth decoding coefficient, multiply the second timeslot of the fifth signal and the sixth decoding coefficient, multiply the first timeslot of the sixth signal and the seventh decoding coefficient, multiply the second timeslot of the sixth signal and the eighth decoding coefficient, and add multiplying results to each other to obtain the second decoded signal.

Preferably, the fifth decoding coefficient $w_{21}=\alpha^2 e^{-j\phi'_{12}}$, the sixth decoding coefficient $w_{22}=e^{j\phi_{11}}$, the seventh decoding coefficient $w_{23}=e^{-j\phi'_{22}}$, and the eighth decoding coefficient $w_{24}=\beta^2 e^{j\phi_{21}}$ ; or

the fifth decoding coefficient $w_{21}=\alpha e^{-j\phi'_{12}}$, the sixth decoding coefficient $w_{22}=\dfrac{1}{\alpha}e^{j\phi_{11}}$ , the seventh decoding coefficient $w_{23}=\dfrac{1}{\beta}e^{-j\phi'_{22}}$ , and the eighth decoding coefficient $w_{24}=\beta e^{j\phi_{21}}$; or

the fifth decoding coefficient $w_{21}=\dfrac{\alpha^2 e^{-j\phi'_{12}}}{e^{j(\phi_{11}-\phi'_{11})}+\alpha^2 e^{j(\phi_{12}-\phi'_{12})}}$ , the sixth decoding coefficient

$w_{22}=\dfrac{e^{j\phi_{11}}}{e^{j(\phi_{11}-\phi'_{11})}+\alpha^2 e^{j(\phi_{12}-\phi'_{12})}}$ , the seventh decoding coefficient $w_{23}=\dfrac{e^{-j\phi'_{22}}}{\beta^2 e^{j(\phi_{21}-\phi'_{21})}+e^{j(\phi_{22}-\phi'_{22})}}$ , and the

eighth decoding coefficient $w_{24}=\dfrac{\beta^2 e^{j\varphi_{21}}}{\beta^2 e^{j(\varphi_{21}-\varphi'_{21})}+e^{j(\varphi_{22}-\varphi'_{22})}}$ , where

$\varphi'_{11}=\varphi'_{tx1}+\varphi'_{rx1}$ , $\varphi'_{12}=\varphi'_{tx2}+\varphi'_{rx1}$ , $\varphi_{11}=\varphi_{tx1}+\varphi_{rx1}$, $\varphi_{12}=\varphi_{tx2}+\varphi_{rx1}$, $\varphi_{21}=\varphi_{tx1}+\varphi_{rx2}$, $\varphi_{22}=\varphi_{tx2}$ $+\varphi_{rx2}$, $\varphi'_{21}=\varphi'_{tx1}+\varphi'_{rx2}$, $\varphi'_{22}=\varphi'_{tx2}+\varphi'_{rx2}$ , $\varphi_{rx1}$ is a phase noise coefficient corresponding to the first timeslot of the first signal, $\varphi'_{rx1}$ is a phase noise coefficient corresponding to the second timeslot of the first signal, $\varphi_{rx2}$ is a phase noise coefficient corresponding to the first timeslot of the second signal, $\varphi'_{rx2}$ is a phase noise coefficient corresponding to the second timeslot of the second signal, $\varphi_{tx1}$ is a phase noise coefficient corresponding to the first timeslot of a first transmitted signal, $\varphi'_{tx1}$ is a phase noise coefficient corresponding to the second timeslot of the first transmitted signal, $\varphi_{tx2}$ is a phase noise coefficient corresponding to the first timeslot of a second transmitted signal, $\varphi'_{tx2}$ is a phase noise coefficient corresponding to the second timeslot of the second transmitted signal, $\varphi_{tx1}$ is a phase noise of the third antenna, $\varphi_{tx2}$ is a phase noise of the fourth antenna, $\varphi_{rx1}$ is a phase noise of the first antenna, $\varphi_{rx2}$ is a phase noise of the second antenna, the first transmitted signal is a signal transmitted by the third antenna, the second transmitted signal is a signal transmitted by the fourth antenna, the first transmitted signal is a signal transmitted by the third antenna, the second transmitted signal is a signal transmitted by the fourth antenna, the first transmitted signal and the second transmitted signal are signals obtained after encoding, $\alpha$ is a ratio of the channel fading coefficient from the third antenna to the first antenna to the channel fading coefficient from the fourth antenna to the first antenna, and $\beta$ is a ratio of the channel fading coefficient from the third antenna to the second antenna to the channel fading coefficient from the fourth antenna to the second antenna.

Preferably, the equalization unit is specifically configured to:

in time domain, perform equalization processing on the first signal and the second signal by using the equalization coefficient.

Preferably, the equalization unit is specifically configured to:
in frequency domain, perform equalization processing on the first signal and the second signal by using the equalization coefficient.

An embodiment of the present invention provides a signal decoding device, configured to perform any of the methods described herein.

It may be learned from the foregoing technical solutions that, in the present invention, in a process of solving the decoding coefficient, the channel fading coefficient is obtained by considering channel fading, the phase noise coefficient is obtained by considering the phase noises of the signal transmit end and the phase noises of the signal receive end, and then the first signal and the second signal are decoded by using the decoding coefficient obtained based on the channel fading coefficient and the phase noise coefficient. An obtained decoded signal is a signal not interfered with by another signal, thereby achieving a good decoding effect.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is an architectural diagram of an Alamouti space-time coding scheme;
FIG. 2 is a schematic diagram of a signal decoding method in the prior art;
FIG. 3 is a flowchart of a signal decoding method according to Embodiment 1 of the present invention;
FIG. 4 is a flowchart of a signal decoding method according to Embodiment 2 of the present invention;
FIG. 5 is a schematic diagram of a signal decoding method according to Embodiment 2 of the present invention; and
FIG. 6 is a structural block diagram of a signal encoding apparatus according to Embodiment 3 of the present invention.

**DESCRIPTION OF EMBODIMENTS**

Space-time coding is one of most important technologies in MIMO technologies. In the prior art, an Alamouti space-time coding scheme is applicable only to a radio wave with a relatively long wavelength and a relatively low frequency. Because a phase noise of such a radio wave is relatively small at a transmit end and therefore can be ignored, two signals obtained after decoding at a receive end are independent of each other, and decoding performance is relatively good. For a radio wave with a relatively short wavelength and a relatively high frequency, a phase noise at the transmit end is relatively high, and a decoded signal obtained after decoding by the receive end includes interference from another signal. A decoding result is relatively poor. The following describes in detail a specific principle.

Referring to FIG. 1, $h_{11}$, $h_{12}$, $h_{21}$, and $h_{22}$ are a channel fading coefficient from a third antenna to a first antenna, a channel fading coefficient from a fourth antenna to the first antenna, a channel fading coefficient from the third antenna to a second antenna, and a channel fading coefficient from the fourth antenna to the second antenna, and received signals $y_1$, $y_1^{'}$, $y_2$, and $y_2^{'}$ may be respectively obtained by using formulas (1) to (4):

$$y_1 = h_{11} \otimes s_1 + h_{12} \otimes s_2 \quad (1)$$

$$y_1' = -h_{11} \otimes s_2^* + h_{12} \otimes s_1^* \quad (2)$$

$$y_2 = h_{21} \otimes s_1 + h_{22} \otimes s_2 \quad (3)$$

$$y_2' = -h_{21} \otimes s_2^* + h_{22} \otimes s_1^* \quad (4)$$

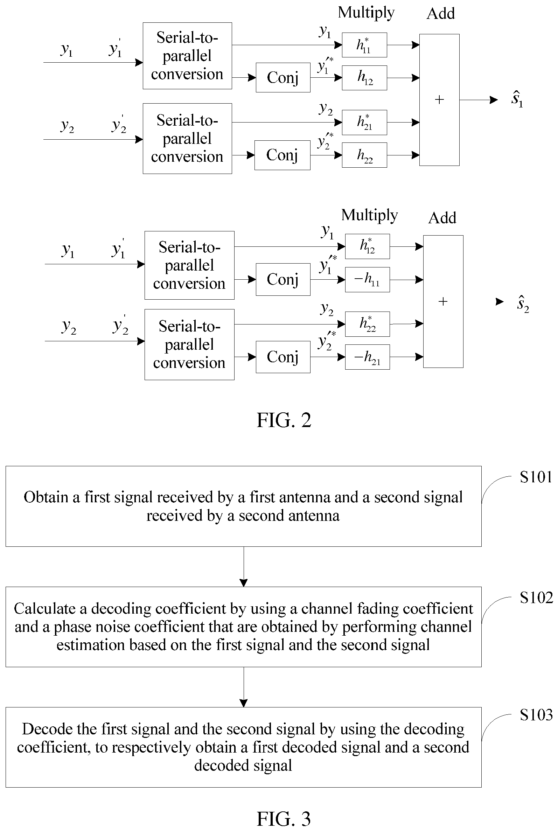

Referring to FIG. 2, after receiving the signal $y_1$ and the signal $y_1'$, the first antenna at a receive end performs decoding. A specific decoding process is as follows:

First, channel estimation is performed on four channels between the first antenna, the second antenna, the third antenna, and the fourth antenna, to respectively obtain decoding coefficient matrices corresponding to the third antenna and the fourth antenna. The channel estimation is a process of estimating a model parameter of an assumed channel model from received data. Channel estimation may be performed by using a plurality of implementation methods. Common implementation methods are a training sequence-based channel estimation method, a pilot sequence-based channel estimation method, and the like. Because these methods are well known to a person skilled in the art, details are not described herein.

In an Alamouti space-time coding scheme, a decoding coefficient vector A that is obtained through channel estimation and that corresponds to the third antenna is $\begin{bmatrix} h_{11}^* & h_{12} & h_{21}^* & h_{22} \end{bmatrix}$, and a decoding coefficient vector B that is obtained through channel estimation and that corresponds to the fourth antenna is $\begin{bmatrix} h_{12}^* & -h_{11} & h_{22}^* & -h_{21} \end{bmatrix}$.

After the decoding coefficient matrix corresponding to the third antenna is obtained, serial-to-parallel conversion is performed on signals received by the first antenna and the second antenna, to be specific, the two signals are converted into four signals. Then the four signals obtained through serial-to-parallel conversion are respectively entered into respective multipliers, and a multiplication parameter in the multiplier is a corresponding decoding coefficient in the decoding coefficient vector A. Signals in a second timeslot of the first antenna and in the second timeslot of the second antenna need to be conjugated (Conj means performing conjugation) before being entered into a corresponding multiplier. Finally, signals obtained after multiplication are added to each other, to obtain a decoded signal $\hat{s}_1$ corresponding to the third antenna. Likewise, the decoding coefficient vector B may be used to obtain a decoded signal $\hat{s}_2$ corresponding to the fourth antenna.

A formula (5) and a formula (6) may be obtained based on the foregoing decoding process and with reference to the formula (1) to the formula (4):

$$\hat{s}_1 = h_{11}^* \otimes y_1 + h_{12} \otimes y_1'^* + h_{21}^* \otimes y_2 + h_{22} \otimes y_2'^*$$

$$= h_{11}^* \otimes h_{11} \otimes s_1 + h_{11}^* \otimes h_{12} \otimes s_2 - h_{12} \otimes h_{11}^* \otimes s_2 + h_{12} \otimes h_{12}^* \otimes s_1$$

$$+ h_{21}^* \otimes h_{21} \otimes s_1 + h_{21}^* \otimes h_{22} \otimes s_2 - h_{22} \otimes h_{21}^* \otimes s_2 + h_{22} \otimes h_{22}^* \otimes s_1$$

$$= \left( h_{11} \otimes h_{11}^* + h_{12} \otimes h_{12}^* + h_{21} \otimes h_{21}^* + h_{22} \otimes h_{22}^* \right) \otimes s_1 \quad (5)$$

$$\hat{s}_2 = h_{12}^* \otimes y_1 - h_{11} \otimes y_1'^* + h_{22}^* \otimes y_2 - h_{21} \otimes y_2'^*$$

$$= h_{12}^* \otimes h_{11} \otimes s_1 + h_{12}^* \otimes h_{12} \otimes s_2 + h_{11} \otimes h_{11}^* \otimes s_2 - h_{11} \otimes h_{12}^* \otimes s_1$$

$$+ h_{22}^* \otimes h_{21} \otimes s_1 + h_{22}^* \otimes h_{22} \otimes s_2 + h_{21} \otimes h_{21}^* \otimes s_2 - h_{21} \otimes h_{22}^* \otimes s_1$$

$$= \left( h_{11} \otimes h_{11}^* + h_{12} \otimes h_{12}^* + h_{21} \otimes h_{21}^* + h_{22} \otimes h_{22}^* \right) \otimes s_2 \quad (6)$$

It may be learned from the formula (5) and the formula (6) that the decoded signal $\hat{s}_1$ that is obtained after decoding and that corresponds to the first antenna is related only to a transmit signal $s_1$, and the transmit signal $s_1$ may be obtained because the decoded signal $\hat{s}_1$ and the decoding coefficient vector A are known. Likewise, the decoded signal $\hat{s}_2$ that is obtained after decoding and that corresponds to the second antenna is related only to a transmit signal $s_2$, and the transmit signal $s_2$ may be obtained because the decoded signal $\hat{s}_2$ and the decoding coefficient vector B are known.

However, when a phase noise exists at a transmit end and phase noises of the third antenna and the fourth antenna at the transmit end are separately independent of phase noises of the first antenna and the second antenna at the receive end, the received signals $y_1$, $y_1'$, $y_2$, and $y_2'$ change to the following:

$$y_1 = h_{11} \otimes s_1 e^{j(\phi_{tx1}+\phi_{rx1})} + h_{12} \otimes s_2 e^{j(\phi_{tx2}+\phi_{rx1})} = h_{11} \otimes s_1 e^{j\phi_{11}} + h_{12} \otimes s_2 e^{j\phi_{12}} \qquad (7)$$

$$y_1' = -h_{11} \otimes s_2^* e^{j(\phi_{tx1}'+\phi_{rx1}')} + h_{12} \otimes s_1^* e^{j(\phi_{tx2}'+\phi_{rx1}')} = -h_{11} \otimes s_2^* e^{j\phi_{11}'} + h_{12} \otimes s_1^* e^{j\phi_{12}'} \qquad (8)$$

$$y_2 = h_{21} \otimes s_1 e^{j(\phi_{tx2}+\phi_{rx1})} + h_{22} \otimes s_2 e^{j(\phi_{tx2}+\phi_{rx2})} = h_{21} \otimes s_1 e^{j\phi_{21}} + h_{22} \otimes s_2 e^{j\phi_{22}} \qquad (9)$$

$$y_2' = -h_{21} \otimes s_2^* e^{j(\phi_{tx1}'+\phi_{rx2}')} + h_{22} \otimes s_1^* e^{j(\phi_{tx2}'+\phi_{rx2}')} = -h_{21} \otimes s_2^* e^{j\phi_{21}'} + h_{22} \otimes s_1^* e^{j\phi_{22}'} \qquad (10)$$

$\varphi_{rx1}$ is a phase noise coefficient corresponding to the received signal $y_1$, $\phi_{rx1}'$ is a phase noise coefficient corresponding to the received signal $y_1'$, $\varphi_{rx2}$ is a phase noise coefficient corresponding to the received signal $y_2$, $\phi_{rx2}'$ is a phase noise coefficient corresponding to the received signal $y_2'$, $\varphi_{tx1}$ is a phase noise coefficient corresponding to the transmitted signal $s_1$, $\phi_{tx1}'$ is a phase noise coefficient corresponding to a transmitted signal $-s_2^*$, $\varphi_{tx2}$ is a phase noise coefficient corresponding to the transmitted signal $s_2$, and $\phi_{tx2}'$ is a phase noise coefficient corresponding to a transmitted signal $s_1^*$.

A formula (11) and a formula (12) may be obtained based on the foregoing decoding process and with reference to the formula (7) to the formula (10):

$$\hat{s}_1 = h_{11}^* \otimes y_1 + h_{12} \otimes y_1'^* + h_{21}^* \otimes y_2 + h_{22} \otimes y_2'^*$$
$$= \left( h_{11}^* \otimes h_{11} e^{j\phi_{11}} + h_{12}^* \otimes h_{12} e^{-j\phi_{12}'} + h_{21}^* \otimes h_{21} e^{j\phi_{21}} + h_{22}^* \otimes h_{22} e^{-j\phi_{22}'} \right) \otimes s_1$$
$$+ \left( h_{11}^* \otimes h_{12} e^{j\phi_{12}} - h_{11}^* \otimes h_{12} e^{-j\phi_{12}'} \right) \otimes s_2 + \left( h_{21}^* \otimes h_{22} e^{j\phi_{22}} - h_{21}^* \otimes h_{22} e^{-j\phi_{21}'} \right) \otimes s_2 \qquad (11)$$

$$\hat{s}_2 = h_{12}^* \otimes y_1 - h_{11} \otimes y_1'^* + h_{22}^* \otimes y_2 - h_{21} \otimes y_2'^*$$
$$= \left( h_{11}^* \otimes h_{11} e^{-j\phi_{11}'} + h_{12}^* \otimes h_{12} e^{j\phi_{12}} + h_{21}^* \otimes h_{21} e^{-j\phi_{21}'} + h_{22}^* \otimes h_{22} e^{j\phi_{22}} \right) \otimes s_2$$
$$+ \left( h_{12}^* \otimes h_{11} e^{j\phi_{11}} - h_{12}^* \otimes h_{11} e^{-j\phi_{12}'} \right) \otimes s_1 + \left( h_{22}^* \otimes h_{21} e^{j\phi_{21}} - h_{22}^* \otimes h_{21} e^{-j\phi_{22}'} \right) \otimes s_1 \qquad (12)$$

It can be learned from the formula (11) and the formula (12) that a phase noise changes over time and is dynamic, and therefore, usually, $j\phi_{12}$ is different from $-j\phi_{12}'$ and $j\phi_{22}$ is different from $-j\phi_{22}$. Therefore, in the formula (11), the transmit signal $s_2$ cannot be canceled, and the transmit signal $s_2$ causes interference to the transmit signal $s_1$. Likewise, in the formula (12), the transmit signal $s_1$ cannot be canceled, and the transmit signal $s_1$ causes interference to the transmit signal $s_2$. A decoding effect is relatively poor.

The following clearly and completely describes the technical solutions in the embodiments of the present invention with reference to the accompanying drawings in the embodiments of the present invention. Apparently, the described embodiments are merely some rather than all of the embodiments of the present invention.

**Embodiment 1**

FIG. 3 is a flowchart of a signal decoding method according to Embodiment 1 of the present invention.

The signal decoding method provided in this embodiment is applied to a MIMO system, the MIMO system includes a signal transmit end and a signal receive end, the signal receive end includes a first antenna and a second antenna, and the signal transmit end includes a third antenna and a fourth antenna.

The method includes the following steps.

Step S101: Obtain a first signal received by the first antenna and a second signal received by the second antenna, where the first signal and the second signal are from the third antenna and the fourth antenna of the signal transmit end.

The MIMO system in this embodiment is a 2×2 transceiver system, to be specific, the signal receive end has two antennas: the first antenna and the second antenna, and the signal transmit end has two antennas: the third antenna and the fourth antenna.

At the signal transmit end, two different signals are obtained after serial-to-parallel conversion is performed on a signal $s$, and are a transmit signal $s_1$ and a transmit signal $s_2$. After orthogonal space-time coding, in a first timeslot, the third antenna transmits the signal $s_1$, and the fourth antenna transmits the signal $s_2$; in a second timeslot, the third antenna transmits a signal $-s_2^*$, and the fourth antenna transmits a signal $s_1^*$ ("*" represents a conjugate complex number). The signal $s_1$ and the signal $-s_2^*$ transmitted by the third antenna are referred to as a first transmitted signal, and a signal $s_2$ and a signal $s_1^*$ transmitted by the fourth antenna are referred to as a second transmitted signal. At the signal receive end, in the first timeslot, the first antenna receives a signal $y_1$, and the second antenna receives a signal $y_2$ ; in the second timeslot, the first antenna receives a signal $y_1'$, and the second antenna receives a signal $y_2'$. The signal $y_1$ and the signal $y_1'$ are referred to as the first signal, and the signal $y_2$ and the signal $y_2'$ are referred to as the second signal.

Step S102: Calculate a decoding coefficient by using a channel fading coefficient and a phase noise coefficient that are obtained by performing channel estimation based on the first signal and the second signal.

Four channels are formed between the two antennas of the signal transmit end and the two antennas of the signal receive end. When a signal is transmitted from the signal transmit end to the signal receive end, because the signal fades due to signal scattering and reflection, a signal received by the signal receive end is not obtained simply through superposition of transmitted signals of the signal transmit end. To recover the signal transmitted by the signal transmit end, a signal fading degree needs to be calculated, so as to compensate for the received first signal and second signal in a decoding process. The signal fading degree is usually indicated by the channel fading coefficient, and the channel fading coefficient is obtained through channel estimation. In this embodiment, there are four channel fading coefficients that respectively belong to the four channels formed between the first antenna, the second antenna, the third antenna, and the fourth antenna. In the prior art, after a channel fading coefficient is obtained, a decoding parameter is obtained by using the channel fading coefficient, so as to decode the first signal and the second signal to obtain the transmit signal $s_1$ and the transmit signal $s_2$.

However, for a radio wave with a relatively short wavelength and a relatively high frequency, a signal received by the signal receive end is affected by attenuation and also by phase noises of the signal transmit end and phase noises of the signal receive end. Because the signal transmit end includes two antennas, and the signal receive end includes two antennas, the phase noises also have four values that respectively correspond to the four antennas. In addition, usually, the phase noises of the signal transmit end and the phase noises of the signal receive end are mutually independent of each other.

For the decoding parameter in the prior art, only the channel fading coefficient is considered, and no phase noise coefficient is considered. Consequently, the signal $s_1$ and the signal $s_2$ that are obtained through decoding interfere with each other, and decoding performance is relatively poor. In this embodiment, for the decoding parameter, not only the channel fading coefficient is considered, but also a phase noise coefficient of the signal transmit end and a phase noise coefficient of the signal receive end are considered. Same as the channel fading coefficient, the phase noise coefficient may also be obtained through channel estimation. Specifically, in an implementation process, the channel fading coefficient and the phase noise coefficient may be obtained by performing channel estimation once, to be specific, a phase noise is used as a part of a channel. During channel estimation, the channel fading coefficient and the phase noise coefficient are calculated as a whole. If a channel whose phase noise is not considered is $H$, a channel whose phase noise is considered is $He^{j\varphi}$. Then the channel fading coefficient and the phase noise coefficient are used as a whole to obtain the decoding coefficient. It should be noted that, if the phase noise is considered in the channel, because the phase noise changes dynamically over time, the channel also dynamically changes, and the decoding coefficient obtained through calculation also dynamically changes. If a training-based channel estimation method, the signal transmit end needs to periodically send a training sequence to perform channel estimation, to obtain a decoding coefficient corresponding to the training sequence, and when the first signal and the second signal are not received signals corresponding to the training sequence, decoding coefficients respectively corresponding to the first signal and the second signal need to be estimated through an interpolation or in another manner. For example, it is assumed that a start time point of a time period T is tl, a corresponding decoding coefficient is m1, an end time point is t2, and a corresponding decoding coefficient is m2. If a receiving time of the first signal and the second signal is t3 and t2>t3>tl, a corresponding decoding coefficient m3 may be equal to m1+(m2-m1)(t3-t1)/(t2-t1).

Alternatively, the channel fading coefficient and the phase noise coefficient may be obtained by performing channel estimation twice, to be specific, the channel fading coefficient is obtained by performing channel estimation for a first time, and the phase noise coefficient is obtained by performing channel estimation for a second time. Compared with channel estimation performed once, performing channel estimation twice can greatly reduce a workload of channel estimation performed for a single time, thereby improving decoding efficiency. For example, if the training-based channel estimation method is used, when channel estimation is performed once, a length of a training sequence for the channel estimation is L+1 (L is a channel impulse response length, and L is greater than 1 when channel equalization is not performed). During the channel estimation performed twice, channel fading and a phase noise are separated. Because the channel fading coefficient is a relatively stable parameter, channel estimation may be performed at a very long interval. For estimation of the phase noise coefficient, when channel equalization is performed, a channel impulse response length is 1, a length of a required training sequence is 1+1=2, and is less than a length of a training sequence required for performing channel estimation once, and therefore, a calculation amount of the channel estimation performed twice is much less. The channel estimation performed twice is described in detail in the following embodiment, and details are not described herein.

Step S103: Decode the first signal and the second signal by using the decoding coefficient, to respectively obtain a first decoded signal and a second decoded signal.

After the channel fading coefficient and the phase noise coefficient are obtained through channel estimation, the decoding parameter is obtained based on the channel fading coefficient and the phase noise coefficient, and the first signal and the second signal are decoded by using the decoding parameter to obtain the first decoded signal and the second decoded signal. The first decoded signal is related only to the transmit signal $s_1$ corresponding to the third antenna and is unrelated to the transmit signal $s_2$ corresponding to the fourth antenna, and the second decoded signal is related only to the transmit signal $s_1$ corresponding to the fourth antenna and is unrelated to the transmit signal $s_2$ corresponding to the third antenna. It may be learned from FIG. 1 that the transmit signal $s_1$ and the transmit signal $s_2$ are signals before space-time coding, and after space-time coding is performed, a signal transmitted by the third antenna is a first transmitted signal, and a signal transmitted by the fourth antenna is a second transmitted signal.

In this embodiment, in a process of solving the decoding coefficient, the channel fading coefficient is obtained by considering channel fading, the phase noise coefficient is obtained by considering the phase noises of the signal transmit end and the phase noises of the signal receive end, and then the first signal and the second signal are decoded by using the decoding parameter obtained based on the channel fading coefficient and the phase noise coefficient. An obtained decoded signal is a signal not interfered with by another signal, thereby achieving a good decoding effect.

**Embodiment 2**

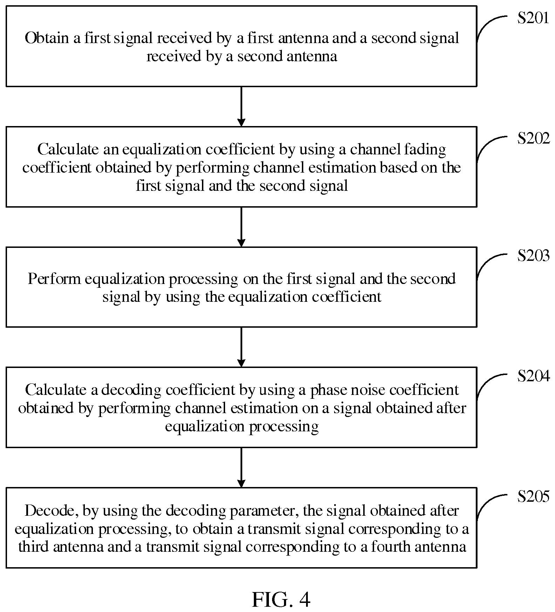

FIG. 4 is a flowchart of a signal decoding method according to Embodiment 2 of the present invention.

The signal decoding method provided in this embodiment includes the following steps.

Step S201: Obtain a first signal received by a first antenna and a second signal received by a second antenna, where the first signal and the second signal are from a third antenna and a fourth antenna of a signal transmit end.

Because step S201 is the same as step S101 in Embodiment 1, details are not described herein again.

Step S202: Calculate an equalization coefficient by using a channel fading coefficient obtained by performing channel estimation based on the first signal and the second signal.

To improve decoding efficiency, channel estimation is performed twice in this embodiment, the channel fading coefficient is obtained by performing channel estimation for a first time, and a phase noise coefficient is obtained by performing channel estimation for a second time. It is assumed that channel fading coefficients obtained by performing channel estimation for a first time are $h_{11}$, $h_{12}$, $h_{21}$, and $h_{22}$. $h_{11}$ is a channel fading coefficient from the third antenna to the first antenna, $h_{12}$ is a channel fading coefficient from the fourth antenna to the first antenna, $h_{21}$ is a channel fading coefficient from the third antenna to the second antenna, and $h_{22}$ is a channel fading coefficient from the fourth antenna to the second antenna.

Step S203: Perform equalization processing on the first signal and the second signal by using the equalization coefficient.

Because channel fading exists in a process of transmitting a transmit signal on four channels between the first antenna and the fourth antenna, in this embodiment, the channel fading coefficient obtained through channel estimation is used to obtain the equalization coefficient, and equalization processing is performed on the first signal and the second signal by using the equalization coefficient, to cancel impact of channel fading on the transmit signal. In this way, only a phase noise needs to be considered when channel estimation is performed for a second time, so as to reduce a workload of channel estimation.

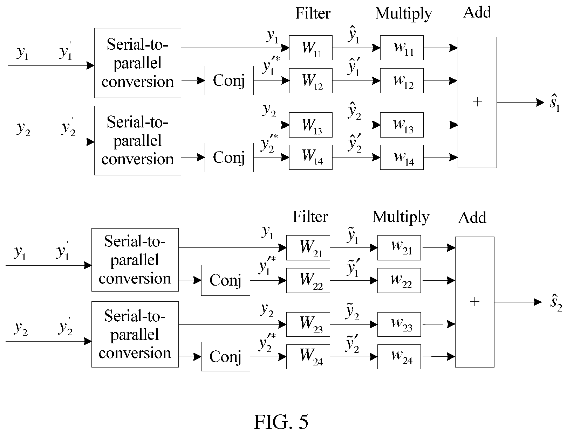

Referring to FIG. 5, a specific equalization processing process may include the following:
The first signal and the second signal are first preprocessed to obtain a first group of four signals and a second group of four signals, where the first group of four signals and the second group of four signals each include a first timeslot of the first signal, a conjugate of a second timeslot of the first signal, the first timeslot of the second signal, and a conjugate of the second timeslot of the second signal. In practical application, to obtain the first group of four signals and the second group of four signals, serial-to-parallel conversion may be performed twice on each of the first signal and the second signal, to obtain the first timeslot and the second timeslot of the first signal in the two groups of four signals, and the first timeslot and the second timeslot of the second signal, and then conjugation is performed on the second timeslot of the first signal and the second timeslot of the second signal in the two groups of four signals.

The equalization processing is filtering the two groups of four signals by using the equalization coefficient. The equalization processing step may be performed in time domain, or may be performed in frequency domain. If equalization processing is performed in time domain, the equalization coefficient is a time-domain equalization coefficient, and if equalization processing is performed in frequency domain, the equalization coefficient is a frequency-domain equalization coefficient. Because the first signal and the second signal are time-domain signals, equalization processing only needs to be directly performed in time domain. The equalization processing is performing convolution on the two groups of four time-domain signals by using the equalization coefficient. However, if equalization processing is performed in frequency domain, the first signal and the second signal need to be converted from time-domain signals into frequency-domain signals, and then equalization processing is performed. In this case, the equalization processing means that the two groups of four signals are multiplied by using the equalization coefficient, and then signals obtained after equalization processing are converted into time-domain signals, so as to ensure that decoding in step S204 is performed in time domain. For brevity, the following formula for equalization processing is performed in time domain. Equalization processing may be performed in frequency domain with reference to these formulas.

An equalization coefficient corresponding to the first group of four signals is a first group of equalization coefficients, and the first group of equalization coefficients include a first equalization coefficient $W_{11}$, a second equalization coefficient $W_{12}$, a third equalization coefficient $W_{13}$, and a fourth equalization coefficient $W_{14}$. The first timeslot of the first signal is filtered by using the first equalization coefficient $W_{11}$, the second timeslot of the first signal is filtered by using the second equalization coefficient $W_{12}$, the first timeslot of the second signal is filtered by using the third equalization coefficient $W_{13}$, and the second timeslot of the second signal is filtered by using the fourth equalization coefficient $W_{14}$.

An equalization coefficient corresponding to the second group of four signals is a second group of equalization coefficients, and the second group of equalization coefficients include a fifth equalization coefficient $W_{21}$, a sixth equalization coefficient $W_{22}$, a seventh equalization coefficient $W_{23}$, and an eighth equalization coefficient $W_{24}$. The first timeslot of the first signal is filtered by using the fifth equalization coefficient $W_{21}$, the second timeslot of the first signal is filtered by using the sixth equalization coefficient $W_{22}$, the first timeslot of the second signal is filtered by using the seventh equalization coefficient $W_{23}$, and the second timeslot of the second signal is filtered by using the eighth equalization coefficient $W_{24}$.

Because an objective of equalization processing is to cancel impact of channel fading, the equalization coefficient needs to meet the condition.

$$W_{11} = \frac{1}{h_{11}}$$

In a possible implementation, the first equalization coefficient , the second equalization coefficient

$$W_{12} = \frac{1}{h_{12}^*}$$ , the third equalization coefficient $$W_{13} = \frac{1}{h_{21}}$$ , and the fourth equalization coefficient $$W_{14} = \frac{1}{h_{22}^*}$$ .

$$W_{21} = \frac{1}{h_{12}}$$

In a possible implementation, the fifth equalization coefficient , the sixth equalization coefficient

$$W_{22} = \frac{-1}{h_{11}^*}$$ , the seventh equalization coefficient $$W_{23} = \frac{1}{h_{22}}$$ , and the eighth equalization coefficient $$W_{24} = \frac{-1}{h_{21}^*}$$ .

$h_{11}$ is a channel fading coefficient from the third antenna to the first antenna, $h_{12}$ is a channel fading coefficient from the fourth antenna to the first antenna, $h_{21}$ is a channel fading coefficient from the third antenna to the second antenna, and $h_{22}$ is a channel fading coefficient from the fourth antenna to the second antenna. $h_{12}^*$ is a conjugate of $h_{12}$, $h_{22}^*$ is a conjugate of $h_{22}$, $h_{11}^*$ is a conjugate of $h_{11}$, and $h_{21}^*$ is a conjugate of $h_{21}$.

It should be noted that a MIMO system with dual-antenna transmission and dual-antenna receiving in this embodiment has the following features: The first antenna is relatively close to the second antenna, and the third antenna is relatively close to the fourth antenna. Therefore, the four channels formed between the first antenna and the fourth antenna are consistent in frequency selective fading, and are different in flat fading. Therefore, there is a proportional relationship between $h_{11}$ and $h_{12}$, and this may be specifically represented by $h_{12} = \alpha h_{11}$. There is also a proportional relationship between $h_{21}$ and $h_{12}$, and this may be specifically represented by $h_{21} = \beta h_{22}$.

After equalization processing, a third signal and a fourth signal that correspond to the first group of four signals, and a fifth signal and a sixth signal that correspond to the second group of four signals are obtained.

The third signal includes the first timeslot $\hat{y}_1$ and the second timeslot $\hat{y}_1'$, and the fourth signal includes the first timeslot $\hat{y}_2$ and the second timeslot $\hat{y}_2'$. The following formula (13) to formula (16) may be obtained with reference to the formula (7) to the formula (10):

$$
\begin{aligned}
\hat{y}_1 = W_{11} \otimes y_1 &= \frac{1}{h_{11}} \otimes h_{11} \otimes s_1 e^{j\varphi_{11}} + \frac{1}{h_{11}} \otimes h_{12} \otimes s_2 e^{j\varphi_{12}} \\
&= \frac{1}{h_{11}} \otimes h_{11} \otimes s_1 e^{j\varphi_{11}} + \frac{1}{h_{11}} \otimes (\alpha h_{11}) \otimes s_2 e^{j\varphi_{12}} \\
&= e^{j\varphi_{11}} s_1 + \alpha e^{j\varphi_{12}} s_2 \\
&= A_1 s_1 + A_2 s_2
\end{aligned}
\tag{13}
$$

$$
\begin{aligned}
\hat{y}_1' = W_{12} \otimes y_1'^* &= \frac{1}{h_{12}^*} \otimes \left(- h_{11}^*\right) \otimes s_2 e^{-j\varphi_{11}'} + \frac{1}{h_{12}^*} \otimes h_{12}^* \otimes s_1 e^{-j\varphi_{12}'} \\
&= \frac{1}{h_{12}^*} \otimes \left(-\frac{1}{\alpha} h_{12}^*\right) \otimes s_2 e^{-j\varphi_{11}'} + \frac{1}{h_{12}^*} \otimes h_{12}^* \otimes s_1 e^{-j\varphi_{12}'} \\
&= e^{-j\varphi_{12}'} s_1 - \frac{1}{\alpha} e^{-j\varphi_{12}'} s_2 \\
&= A_3 s_1 + A_4 s_2
\end{aligned}
\tag{14}
$$

$$
\begin{aligned}
\hat{y}_2 = W_{13} \otimes y_2 &= \frac{1}{h_{21}} \otimes h_{21} \otimes s_1 e^{j\varphi_{21}} + \frac{1}{h_{21}} \otimes h_{22} \otimes s_2 e^{j\varphi_{22}} \\
&= \frac{1}{h_{21}} \otimes h_{21} \otimes s_1 e^{j\varphi_{21}} + \frac{1}{h_{21}} \otimes \left(\frac{1}{\beta} h_{21}\right) \otimes s_2 e^{j\varphi_{22}} \\
&= e^{j\varphi_{21}} s_1 + \frac{1}{\beta} e^{j\varphi_{22}} s_2 \\
&= B_1 s_1 + B_2 s_2
\end{aligned}
\tag{15}
$$

$$\hat{y}_2' = W_{14} \otimes y_2' = \frac{1}{h_{22}^*} \otimes \left(-h_{21}^*\right) \otimes s_2 e^{-j\varphi_{21}'} + \frac{1}{h_{22}^*} \otimes h_{22}^* \otimes s_1 e^{-j\varphi_{22}'}$$

$$= \frac{1}{h_{22}^*} \otimes \left(-\beta h_{22}^*\right) \otimes s_2 e^{-j\varphi_{21}'} + \frac{1}{h_{22}^*} \otimes h_{22}^* \otimes s_1 e^{-j\varphi_{22}'}$$

$$= e^{-j\varphi_{22}'} s_1 - \beta e^{-j\varphi_{21}'} s_2$$

$$= B_3 s_1 + B_4 s_2 \qquad (16)$$

$A_1 = e^{j\varphi_{11}}$, $A_2 = \alpha e^{j\varphi_{12}}$, $A_3 = e^{-j\varphi_{12}'}$, and $A_4 = -\frac{1}{\alpha} e^{-j\varphi_{11}'}$.

$B_1 = e^{j\varphi_{21}}$, $B_2 = \frac{1}{\beta} e^{j\varphi_{22}}$, $B_3 = e^{-j\varphi_{22}'}$, and $B_4 = -\beta e^{-j\varphi_{21}'}$.

The following result may be obtained by using the formula (13) to the formula (16):

$$\begin{bmatrix} \hat{y}_1 \\ \hat{y}_1' \end{bmatrix} = \begin{bmatrix} A_1 & A_2 \\ A_3 & A_4 \end{bmatrix} \begin{bmatrix} s_1 \\ s_2 \end{bmatrix} = H_1 \begin{bmatrix} s_1 \\ s_2 \end{bmatrix} \qquad \begin{bmatrix} \hat{y}_2 \\ \hat{y}_2' \end{bmatrix} = \begin{bmatrix} B_1 & B_2 \\ B_3 & B_4 \end{bmatrix} \begin{bmatrix} s_1 \\ s_2 \end{bmatrix} = H_2 \begin{bmatrix} s_1 \\ s_2 \end{bmatrix}$$

The fifth signal includes the first timeslot $\tilde{y}_1$ and the second timeslot $\tilde{y}_1'$, and the sixth signal includes the first timeslot $\tilde{y}_2$ and the second timeslot $\tilde{y}_2'$. The following formula (17) to formula (20) may be obtained with reference to the formula (7) to the formula (10):

$$\tilde{y}_1 = W_{21} \otimes y_1 = \frac{1}{h_{12}} \otimes (h_{11} \otimes s_1 e^{j\phi_{11}} + h_{12} \otimes s_2 e^{j\phi_{12}})$$

$$= \frac{1}{\alpha} e^{j\phi_{11}} s_1 + e^{j\phi_{12}} s_2$$

$$= C_1 s_1 + C_2 s_2 \qquad (17)$$

$$\tilde{y}_1' = W_{22} \otimes y_1' = \frac{1}{h_{11}^*} \otimes (-h_{11}^* \otimes s_2 e^{-j\phi_{11}'} + h_{12}^* \otimes s_1 e^{-j\phi_{12}'})$$

$$= \alpha e^{-j\phi_{12}'} s_1 - e^{-j\phi_{11}'} s_2$$

$$= C_3 s_1 + C_4 s_2 \qquad (18)$$

$$\tilde{y}_2 = W_{23} \otimes y_2 = \frac{1}{h_{22}} \otimes (h_{21} \otimes s_1 e^{j\phi_{21}} + h_{22} \otimes s_2 e^{j\phi_{22}})$$

$$= \beta e^{j\phi_{21}} s_1 + e^{j\phi_{22}} s_2$$

$$= D_1 s_1 + D_2 s_2 \qquad (19)$$

$$\tilde{y}'_2 = W_{24} \otimes y'_2 = \frac{1}{h^*_{21}} \otimes (-h^*_{21} \otimes s_2 e^{-j\phi'_{21}} + h^*_{22} \otimes s_1 e^{-j\phi'_{22}})$$

$$= \frac{1}{\beta} e^{-j\phi'_{22}} s_1 - e^{-j\phi'_{21}} s_2$$

$$= D_3 s_1 + D_4 s_2 \tag{20}$$

$$C_1 = \frac{1}{\alpha} e^{j\varphi_{11}}, \ C_2 = e^{j\varphi_{12}}, \ C_3 = \alpha e^{-j\varphi'_{12}}, \text{ and } C_4 = -e^{-j\varphi'_{11}}.$$

$$D_1 = \beta e^{j\varphi_{21}}, \ D_2 = e^{j\varphi_{22}}, \ D_3 = \frac{1}{\beta} e^{-j\varphi'_{22}}, \text{ and } D_4 = -e^{-j\varphi'_{21}}.$$

The following result may be obtained by using the formula (17) to the formula (20):

$$\begin{bmatrix} \tilde{y}_1 \\ \tilde{y}'_1 \end{bmatrix} = \begin{bmatrix} C_1 & C_2 \\ C_3 & C_4 \end{bmatrix} \begin{bmatrix} s_1 \\ s_2 \end{bmatrix} = H_3 \begin{bmatrix} s_1 \\ s_2 \end{bmatrix} \qquad \begin{bmatrix} \tilde{y}_2 \\ \tilde{y}'_2 \end{bmatrix} = \begin{bmatrix} D_1 & D_2 \\ D_3 & D_4 \end{bmatrix} \begin{bmatrix} s_1 \\ s_2 \end{bmatrix} = H_4 \begin{bmatrix} s_1 \\ s_2 \end{bmatrix}$$

$\varphi_{11} = \varphi_{tx1} + \varphi_{rx1}$, $\varphi_{12} = \varphi_{tx2} + \varphi_{rx1}$, $\varphi'_{11} = \varphi'_{tx1} + \varphi'_{rx1}$, $\varphi'_{12} = \varphi'_{tx2} + \varphi'_{rx1}$, $\varphi_{21} = \varphi_{tx1} + \varphi_{rx2}$, $\varphi_{22} = \varphi_{tx2} + \varphi_{rx2}$, $\varphi'_{21} = \varphi'_{tx1} + \varphi'_{rx2}$, $\varphi'_{22} = \varphi'_{tx2} + \varphi'_{rx2}$, $\varphi_{rx1}$ is a phase noise coefficient corresponding to the first timeslot of the first signal, $\varphi'_{rx1}$ is a phase noise coefficient corresponding to the second timeslot of the first signal, $\varphi_{rx2}$ is a phase noise coefficient corresponding to the first timeslot of the second signal, $\varphi'_{rx2}$ is a phase noise coefficient corresponding to the second timeslot of the second signal, $\varphi_{tx1}$ is a phase noise coefficient corresponding to the first timeslot of a first transmitted signal, $\varphi'_{tx1}$ is a phase noise coefficient corresponding to the second timeslot of the first transmitted signal, $\varphi_{tx2}$ is a phase noise coefficient corresponding to the first timeslot of a second transmitted signal, $\varphi'_{tx2}$ is a phase noise coefficient corresponding to the second timeslot of the second transmitted signal, the first transmitted signal is a signal transmitted by the third antenna, the second transmitted signal is a signal transmitted by the fourth antenna, and the first transmitted signal and the second transmitted signal are signals obtained after encoding.

Step S204: Calculate a decoding coefficient by using a phase noise coefficient obtained by performing channel estimation on a signal obtained after equalization processing.

Equalization processing is performed on the first signal and the second signal in this embodiment to cancel interference caused to a transmitted signal of the signal transmit end by the four channels between the first antenna and the fourth antenna. If the third signal is considered as a signal received by the first antenna of the signal receive end, and the fourth signal is considered as a signal received by the second antenna, the four channels between the first antenna and the fourth antenna can be considered as flat channels, in other words, channels without fading. Likewise, if the fifth signal is considered as a signal received by the first antenna, the sixth signal is considered as a signal received by the second antenna, and the four channels between the first antenna and the fourth antenna may also be considered as channels without intercode interference.

In this embodiment, channel estimation is performed on a signal obtained after equalization processing, so as to obtain a phase noise coefficient. Specifically, channel estimation is performed based on the third signal and the fourth signal to obtain a first group of phase noise coefficients, to be specific, phase noise coefficients in phase noise matrices $H_1$ and $H_2$. Channel estimation is performed based on the fifth signal and the sixth signal to obtain a second group of phase noise coefficients, to be specific, phase noise coefficients in phase noise matrices $H_3$ and $H_4$.

In this embodiment, after the phase noise coefficient is obtained, a decoding coefficient is obtained based on the phase noise coefficient. The decoding coefficient is used for decoding, so that a signal obtained through decoding is related only to the transmit signal $s_1$ or the transmit signal $s_2$.

Specifically, a first group of decoding coefficients are calculated based on the first group of phase noise coefficients, and the first group of decoding coefficients include a first decoding coefficient $W_{11}$, a second decoding coefficient $W_{12}$, a third decoding coefficient $W_{13}$, and a fourth decoding coefficient $W_{14}$.

It can be learned from the foregoing that the first decoding coefficient needs to meet a condition that a first decoded signal obtained through decoding is related only to the transmit signal $s_1$ corresponding to the third antenna.

In a first possible implementation, $w_{11} = e^{-j\phi'_{11}}$, $w_{12} = \alpha^2 e^{j\phi_{12}}$, $w_{13} = \beta^2 e^{-j\phi'_{21}}$, and $w_{14} = e^{j\phi_{22}}$.

In a second possible implementation, $w_{11} = -\dfrac{1}{\alpha} e^{-j\varphi'_{11}}$, $w_{12} = -\alpha e^{j\phi_{12}}$, $w_{13} = -\beta e^{-j\phi'_{21}}$, and

$$w_{14} = -\frac{1}{\beta} e^{j\phi_{22}}.$$

In a third possible implementation,

$$w_{11} = H_1^{-1}(1,1) = \frac{A_4}{A_1 A_4 - A_2 A_3} = \frac{e^{j(-\varphi'_{11})}}{e^{j(\varphi_{11}-\varphi'_{11})} + \alpha^2 e^{j(\varphi_{12}-\varphi'_{12})}},$$

$$w_{12} = H_1^{-1}(1,2) = \frac{-A_2}{A_1 A_4 - A_2 A_3} = \frac{\alpha^2 e^{j(\varphi_{12})}}{e^{j(\varphi_{11}-\varphi'_{11})} + \alpha^2 e^{j(\varphi_{12}-\varphi'_{12})}},$$

$$w_{13} = H_2^{-1}(1,1) = \frac{B_4}{B_1 B_4 - B_2 B_3} = \frac{\beta^2 e^{-j\varphi'_{21}}}{\beta^2 e^{j(\varphi_{21}-\varphi'_{21})} + e^{j(\varphi_{22}-\varphi'_{22})}},$$ and

$$w_{14} = H_2^{-1}(1,2) = \frac{-B_2}{B_1 B_4 - B_2 B_3} = \frac{e^{j\varphi_{22}}}{\beta^2 e^{j(\varphi_{21}-\varphi'_{21})} + e^{j(\varphi_{22}-\varphi'_{22})}}.$$

A second group of decoding coefficients are calculated based on the second group of phase noise coefficients, and the second group of decoding coefficients include a fifth decoding coefficient $W_{21}$, a sixth decoding coefficient $W_{22}$, a seventh decoding coefficient $W_{23}$, and an eighth decoding coefficient $W_{24}$.

It can be learned from the foregoing that the second decoding coefficient needs to meet a condition that a second decoded signal obtained through decoding is related only to the transmit signal $s_2$ corresponding to the fourth antenna.

In a first possible implementation, $w_{21} = \alpha^2 e^{-j\varphi'_{12}}$, $w_{22} = e^{j\phi_{12}}$, $w_{23} = e^{-j\varphi'_{22}}$, and $w_{24} = \beta^2 e^{j\varphi_{21}}$.

In a second possible implementation, $w_{21} = \alpha e^{-j\varphi'_{12}}$, $w_{22} = \dfrac{1}{\alpha} e^{j\varphi_{11}}$, $w_{23} = \dfrac{1}{\beta} e^{-j\varphi'_{12}}$, and $w_{24} = \beta e^{j\varphi_{21}}$.

In a third possible implementation,

$$w_{21} = H_3^{-1}(2,1) = \frac{-C_3}{C_1 C_4 - C_2 C_3} = \frac{\alpha^2 e^{-j\varphi'_{12}}}{e^{j(\varphi_{11}-\varphi'_{11})} + \alpha^2 e^{j(\varphi_{12}-\varphi'_{12})}},$$

$$w_{22} = H_3^{-1}(1,2) = \frac{C_1}{C_1 C_4 - C_2 C_3} = \frac{e^{j\varphi_{11}}}{e^{j(\varphi_{11}-\varphi'_{11})} + \alpha^2 e^{j(\varphi_{12}-\varphi'_{12})}},$$

$$w_{23} = H_4^{-1}(2,1) = \frac{-D_3}{D_1 D_4 - D_2 D_3} = \frac{e^{-j\varphi'_{22}}}{\beta^2 e^{j(\varphi_{21}-\varphi'_{21})} + e^{j(\varphi_{22}-\varphi'_{22})}},$$ and

$$w_{24} = H_4^{-1}(2,2) = \frac{D_1}{D_1 D_4 - D_2 D_3} = \frac{\beta^2 e^{j\phi'_{12}}}{\beta^2 e^{j(\phi_{21}-\phi'_{21})} + e^{j(\phi_{22}-\phi'_{22})}}.$$

Certainly, it may be understood that the foregoing three possible implementations of the first decoding coefficient to the eighth decoding coefficient do not constitute a limitation on the present invention.

Step S205: Decode, by using the decoding parameter, the signal obtained after equalization processing, to obtain a transmit signal corresponding to the third antenna and a transmit signal corresponding to the fourth antenna.

In this embodiment, after the first group of decoding coefficients are obtained, the third signal is decoded by using the first group of decoding coefficients. A specific decoding process may be: multiplying the first timeslot of the third signal and the first decoding coefficient, multiplying the second timeslot of the third signal and the second decoding coefficient, multiplying the first timeslot of the fourth signal and the third decoding coefficient, multiplying the second timeslot of the fourth signal and the fourth decoding coefficient, and adding multiplying results to each other to obtain the first decoded signal $\hat{s}_1$.

After the second group of decoding coefficients are obtained, the fourth signal is decoded by using the second group of decoding coefficients. A specific decoding process may be: multiplying the first timeslot of the fifth signal and the fifth decoding coefficient, multiplying the second timeslot of the fifth signal and the sixth decoding coefficient, multiplying the first timeslot of the sixth signal and the seventh decoding coefficient, multiplying the second timeslot of the sixth signal and the eighth decoding coefficient, and adding multiplying results to each other to obtain the second decoded signal $\hat{s}_2$.

For the first decoded signal $\hat{s}_1$, specifically, a formula (21) may be obtained with reference to the formula (13) to the formula (16) and the first implementation of the first group of decoding coefficients:

$$\hat{s}_1 = \hat{y}_1 \cdot w_{11} + \hat{y}_1' \cdot w_{12} + \hat{y}_2 \cdot w_{13} + \hat{y}_2' \cdot w_{14}$$

$$= e^{j(\varphi_{11}-\varphi_{11}')}s_1 + \alpha e^{j(\varphi_{12}-\varphi_{11}')}s_2 + \alpha^2 e^{j(\varphi_{12}-\varphi_{12}')}s_1 - \alpha e^{j(\varphi_{12}-\varphi_{11}')}s_2$$

$$+ \beta^2 e^{j(\varphi_{21}-\varphi_{21}')}s_1 + \beta e^{j(\varphi_{22}-\varphi_{21}')}s_2 + e^{j(\varphi_{22}-\varphi_{22}')}s_1 - \beta e^{j(\varphi_{22}-\varphi_{21}')}s_2$$

$$= \left(e^{j(\varphi_{11}-\varphi_{11}')} + \alpha^2 e^{j(\varphi_{12}-\varphi_{12}')} + \beta^2 e^{j(\varphi_{21}-\varphi_{21}')} + e^{j(\varphi_{22}-\varphi_{22}')}\right)s_1 \qquad (21)$$

A formula (22) may be obtained with reference to the formula (13) to the formula (16) and the second implementation of the first group of decoding coefficients:

$$\hat{s}_1 = \hat{y}_1 \cdot w_{11} + \hat{y}_1' \cdot w_{12} + \hat{y}_2 \cdot w_{13} + \hat{y}_2' \cdot w_{14}$$

$$= -\frac{1}{\alpha} e^{j(\varphi_{11}-\varphi_{11}')}s_1 - e^{j(\varphi_{12}-\varphi_{11}')}s_2 - \alpha e^{j(\varphi_{12}-\varphi_{12}')}s_1 + e^{j(\varphi_{12}-\varphi_{11}')}s_2$$

$$- \beta e^{j(\varphi_{21}-\varphi_{21}')}s_1 - e^{j(\varphi_{22}-\varphi_{21}')}s_2 - \frac{1}{\beta} e^{j(\varphi_{22}-\varphi_{22}')}s_1 + e^{j(\varphi_{22}-\varphi_{21}')}s_2$$

$$= \left(-\frac{1}{\alpha} e^{j(\varphi_{11}-\varphi_{11}')} - \alpha e^{j(\varphi_{12}-\varphi_{12}')} - \beta e^{j(\varphi_{21}-\varphi_{21}')} - \frac{1}{\beta} e^{j(\varphi_{22}-\varphi_{22}')}\right)s_1 \qquad (22)$$

A formula (23) may be obtained with reference to the formula (13) to the formula (16) and the third implementation of the first group of decoding coefficients:

$$\hat{s}_1 = \hat{y}_1 \cdot w_{11} + \hat{y}_1' \cdot w_{12} + \hat{y}_2 \cdot w_{13} + \hat{y}_2' \cdot w_{14}$$

$$= \frac{1}{e^{j(\varphi_{11}-\varphi_{11}')} + \alpha^2 e^{j(\varphi_{12}-\varphi_{12}')}} \left( e^{j(\varphi_{11}-\varphi_{11}')}s_1 + \alpha e^{j(\varphi_{12}-\varphi_{11}')}s_2 + \alpha^2 e^{j(\varphi_{12}-\varphi_{12}')}s_1 - \alpha e^{j(\varphi_{12}-\varphi_{11}')}s_2 \right)$$

$$+ \frac{1}{e^{j(\varphi_{22}-\varphi_{22}')} + \alpha^2 e^{j(\varphi_{21}-\varphi_{21}')}} \left( \beta^2 e^{j(\varphi_{21}-\varphi_{21}')}s_1 + \beta e^{j(\varphi_{22}-\varphi_{21}')}s_2 + e^{j(\varphi_{22}-\varphi_{22}')}s_1 - \beta e^{j(\varphi_{22}-\varphi_{21}')}s_2 \right)$$

$$= 2s_1 \quad (23)$$

It can be learned from the formula (21) to the formula (23) that the first decoded signal $\hat{s}_1$ is related only to the transmit signal $s_1$ corresponding to the third antenna, and is not interfered with by the transmit signal $s_2$, and a good decoding result is obtained.

For the second decoded signal $\hat{s}_2$, specifically, a formula (24) may be obtained with reference to the formula (17) to the formula (20) and the first implementation of the second group of decoding coefficients:

$$\hat{s}_2 = \tilde{y}_1 \cdot w_{21} + \tilde{y}_1' \cdot w_{22} + \tilde{y}_2 \cdot w_{23} + \tilde{y}_2' \cdot w_{24}$$

$$= \alpha e^{j(\varphi_{11}-\varphi_{12}')}s_1 + \alpha^2 e^{j(\varphi_{12}-\varphi_{12}')}s_2 - \alpha e^{j(\varphi_{11}-\varphi_{12}')}s_1 + e^{j(\varphi_{11}-\varphi_{11}')}s_2$$

$$+ \beta e^{j(\varphi_{21}-\varphi_{22}')}s_1 + e^{j(\varphi_{22}-\varphi_{22}')}s_2 - \beta e^{j(\varphi_{21}-\varphi_{22}')}s_1 + \beta^2 e^{j(\varphi_{21}-\varphi_{21}')}s_2$$

$$= \left( \alpha^2 e^{j(\varphi_{12}-\varphi_{12}')} + e^{j(\varphi_{11}-\varphi_{11}')} + e^{j(\varphi_{22}-\varphi_{22}')} + \beta^2 e^{j(\varphi_{21}-\varphi_{21}')} \right)s_2 \quad (24)$$

A formula (25) may be obtained with reference to the formula (17) to the formula (20) and the second implementation of the second group of decoding coefficients:

$$\hat{s}_2 = \tilde{y}_1 \cdot w_{21} + \tilde{y}_1' \cdot w_{22} + \tilde{y}_2 \cdot w_{23} + \tilde{y}_2' \cdot w_{24}$$

$$= e^{j(\varphi_{11}-\varphi_{12}')}s_1 + \alpha e^{j(\varphi_{12}-\varphi_{12}')}s_2 - e^{j(\varphi_{11}-\varphi_{12}')}s_1 + \frac{1}{\alpha} e^{j(\varphi_{11}-\varphi_{11}')}s_2$$

$$+ e^{j(\varphi_{21}-\varphi_{22}')}s_1 + \frac{1}{\beta} e^{j(\varphi_{22}-\varphi_{22}')}s_2 - e^{j(\varphi_{21}-\varphi_{22}')}s_1 + \beta e^{j(\varphi_{21}-\varphi_{21}')}s_2$$

$$= \left( \alpha e^{j(\varphi_{12}-\varphi_{12}')} + \frac{1}{\alpha} e^{j(\varphi_{11}-\varphi_{11}')} + \frac{1}{\beta} e^{j(\varphi_{22}-\varphi_{22}')} + \beta e^{j(\varphi_{21}-\varphi_{21}')} \right)s_2 \quad (25)$$

A formula (26) may be obtained with reference to the formula (17) to the formula (20) and the third implementation of the second group of decoding coefficients:

$$\hat{s}_2 = \tilde{y}_1 \cdot w_{21} + \tilde{y}_1' \cdot w_{22} + \tilde{y}_2 \cdot w_{23} + \tilde{y}_2' \cdot w_{24}$$

$$= \frac{1}{e^{j(\varphi_{11}-\varphi_{11}')} + \alpha^2 e^{j(\varphi_{12}-\varphi_{21}')}} \left( \alpha e^{j(\varphi_{11}-\varphi_{12}')}s_1 + \alpha^2 e^{j(\varphi_{12}-\varphi_{12}')}s_2 - \alpha e^{j(\varphi_{11}-\varphi_{12}')}s_1 + e^{j(\varphi_{11}-\varphi_{11}')}s_2 \right)$$

$$+ \frac{1}{e^{j(\varphi_{22}-\varphi_{22}')} + \beta^2 e^{j(\varphi_{21}-\varphi_{21}')}} \left( \beta e^{j(\varphi_{21}-\varphi_{22}')}s_1 + e^{j(\varphi_{22}-\varphi_{22}')}s_2 - \beta e^{j(\varphi_{21}-\varphi_{22}')}s_1 + \beta^2 e^{j(\varphi_{21}-\varphi_{21}')}s_2 \right)$$

$$= 2s_2 \quad (26)$$

It can be learned from the formula (24) to the formula (26) that the second decoded signal $\hat{s}_2$ is related only to the transmit signal $\hat{s}_2$ corresponding to the fourth antenna, and is not interfered with by the transmit signal $\hat{s}_1$, and a good decoding result is obtained.

In this embodiment, the channel fading coefficient is obtained by performing channel estimation for a first time, and the equalization coefficient is obtained based on the channel fading coefficient, so as to perform equalization processing on the first signal and the second signal to obtain the third signal and the fourth signal. After equalization processing is performed, channel estimation is performed for a second time based on the third signal and the fourth signal to obtain the decoding coefficient, and the first signal and the second signal are decoded by using the decoding coefficient, to respectively obtain the first decoded signal and the second decoded signal. A channel corresponding to the third signal and a channel corresponding to the fourth signal may be considered as channels without intercode interference, thereby improving decoding efficiency.

It may be understood that, for channel estimation methods used for channel estimation performed twice, refer to the prior art. The methods are not specifically limited in the present invention.

In addition, channel estimation performed for a second time is to obtain a phase noise coefficient. Because a phase noise coefficient dynamically changes, if a training-based channel estimation method is used, after a phase noise coefficient corresponding to a training sequence is obtained, an actual phase noise coefficient corresponding to the signal (the third signal and the fourth signal) may be obtained through an interpolation.

**Embodiment 3**

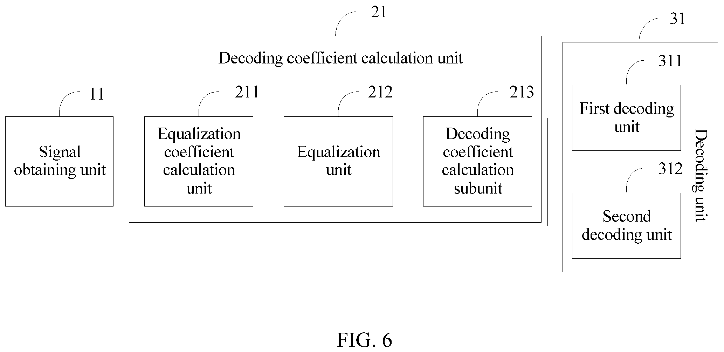

FIG. 6 is a structural block diagram of a signal decoding apparatus according to Embodiment 3 of the present invention.

The signal decoding apparatus provided in this embodiment is applied to a MIMO system, the MIMO system includes a signal transmit end and a signal receive end, the signal receive end includes a first antenna and a second antenna, and the signal transmit end includes a third antenna and a fourth antenna.

The apparatus includes:

a signal obtaining unit 11, a decoding coefficient calculation unit 21, and a decoding unit 31.

The signal obtaining unit 11 is configured to obtain a first signal received by the first antenna and a second signal received by the second antenna, where the first signal and the second signal are from the third antenna and the fourth antenna of the signal transmit end.

The decoding coefficient calculation unit 21 is configured to calculate a decoding coefficient by using a channel fading coefficient and a phase noise coefficient that are obtained by performing channel estimation based on the first signal and the second signal, where the channel fading coefficient includes channel fading coefficients respectively corresponding to four channels formed between the first antenna, the second antenna, the third antenna, and the fourth antenna, the phase noise coefficient includes a phase noise coefficient of the signal transmit end and a phase noise coefficient of the signal receive end, and a phase noise corresponding to the phase noise coefficient of the signal transmit end and a phase noise corresponding to the phase noise coefficient of the signal receive end are independent of each other.

The decoding unit 31 is configured to decode the first signal and the second signal by using the decoding coefficient, to respectively obtain a first decoded signal and a second decoded signal, where the first decoded signal is related only to a transmit signal corresponding to the third antenna and is unrelated to a transmit signal corresponding to the fourth antenna, and the second decoded signal is related only to the transmit signal corresponding to the fourth antenna and is unrelated to the transmit signal corresponding to the third antenna.

In this embodiment, in a process of solving the decoding coefficient, the channel fading coefficient is obtained by considering channel fading, the phase noise coefficient is obtained by considering the phase noises of the signal transmit end and the phase noises of the signal receive end, and then the first signal and the second signal are decoded by using the decoding parameter obtained based on the channel fading coefficient and the phase noise coefficient. An obtained decoded signal is a signal not interfered with by another signal, thereby achieving a good decoding effect.

In a specific implementation process of the decoding coefficient calculation unit 21, the channel fading coefficient and the phase noise coefficient may be obtained by performing channel estimation once, to be specific, during channel estimation, the channel fading coefficient and the phase noise coefficient are calculated as a whole. Then the channel fading coefficient and the phase noise coefficient are used as a whole to obtain the decoding coefficient. Alternatively, the channel fading coefficient and the phase noise coefficient may be obtained by performing channel estimation twice, to be specific, the channel fading coefficient is obtained by performing channel estimation for a first time, and the phase noise coefficient is obtained by performing channel estimation for a second time.

If the channel fading coefficient and the phase noise coefficient are obtained by performing channel estimation twice, the decoding coefficient calculation unit 21 specifically includes:

an equalization coefficient calculation unit 211, an equalization unit 212, and a decoding coefficient calculation subunit 213.

The equalization coefficient calculation unit 211 is configured to calculate an equalization coefficient by using the channel fading coefficient obtained by performing channel estimation based on the first signal and the second signal.

The equalization unit 212 is configured to perform equalization processing on the first signal and the second signal by using the equalization coefficient.

The decoding coefficient calculation subunit 213 is configured to calculate the decoding coefficient by using the phase noise coefficient obtained by performing channel estimation on a signal obtained after equalization processing.

If the first signal and the second signal correspond to a same timeslot, and the timeslot includes a first timeslot and a second timeslot, the equalization coefficient calculation unit 211 is specifically configured to calculate a first group of equalization coefficients and a second group of equalization coefficients by using the channel fading coefficient obtained by performing channel estimation based on the first signal and the second signal.

The equalization unit 212 specifically includes a preprocessing unit and a filter unit, and the filter unit includes a first filter unit and a second filter unit.

The preprocessing unit is configured to preprocess the first signal and the second signal to obtain a first group of four signals and a second group of four signals, where the first group of four signals and the second group of four signals each include the first timeslot of the first signal, a conjugate of the second timeslot of the first signal, the first timeslot of the second signal, and a conjugate of the second timeslot of the second signal.

The first filter unit is configured to filter the first group of four signals by using the first group of equalization coefficients to obtain a third signal and a fourth signal, where the third signal and the fourth signal each correspond to the timeslot.

The second filter unit is configured to filter the second group of four signals by using the second group of equalization coefficients to obtain a fifth signal and a sixth signal, where the fifth signal and the sixth signal each correspond to the timeslot.

If the first group of equalization coefficients include a first equalization coefficient, a second equalization coefficient, a third equalization coefficient, and a fourth equalization coefficient, the first filter unit is specifically configured to:

filter the first timeslot of the first signal by using the first equalization coefficient, to obtain the first timeslot of the third signal;
filter the conjugate of the second timeslot of the first signal by using the second equalization coefficient, to obtain the second timeslot of the third signal;
filter the first timeslot of the second signal by using the third equalization coefficient, to obtain the first timeslot of the fourth signal; and
filter the conjugate of the second timeslot of the second signal by using the fourth equalization coefficient, to obtain the second timeslot of the fourth signal.

If the second group of equalization coefficients include a fifth equalization coefficient, a sixth equalization coefficient, a seventh equalization coefficient, and an eighth equalization coefficient, the second filter unit is specifically configured to:

filter the first timeslot of the first signal by using the fifth equalization coefficient, to obtain the first timeslot of the fifth signal;
filter the conjugate of the second timeslot of the first signal by using the sixth equalization coefficient, to obtain the second timeslot of the fifth signal;
filter the first timeslot of the second signal by using the seventh equalization coefficient, to obtain the first timeslot of the sixth signal; and
filter the conjugate of the second timeslot of the second signal by using the eighth equalization coefficient, to obtain the second timeslot of the sixth signal.

The decoding coefficient calculation subunit 213 may be specifically configured to:

calculate a first group of decoding coefficients by using a first group of phase noise coefficients obtained by performing channel estimation based on the third signal and the fourth signal; and
calculate a second group of decoding coefficients by using a second group of phase noise coefficients obtained by performing channel estimation based on the fifth signal and the sixth signal.

The decoding unit 31 includes a first decoding unit 311 and a second decoding unit 312.

The first decoding unit 311 is configured to:
decode the third signal and the fourth signal by using the first group of decoding coefficients, to obtain the first decoded signal.

The second decoding unit 312 is configured to:

decode the fifth signal and the sixth signal by using the second group of decoding coefficients, to obtain the second decoded signal.

If the first group of decoding coefficients include a first decoding coefficient, a second decoding coefficient, a third decoding coefficient, and a fourth decoding coefficient, the first decoding unit 311 is specifically configured to:

multiply the first timeslot of the third signal and the first decoding coefficient, multiply the second timeslot of the third signal and the second decoding coefficient, multiply the first timeslot of the fourth signal and the third decoding coefficient, multiply the second timeslot of the fourth signal and the fourth decoding coefficient, and add multiplying results to each other to obtain the first decoded signal.

If the second group of decoding coefficients include a fifth decoding coefficient, a sixth decoding coefficient, a seventh decoding coefficient, and an eighth decoding coefficient, the second decoding unit 312 is specifically configured to:

multiply the first timeslot of the fifth signal and the fifth decoding coefficient, multiply the second timeslot of the fifth signal and the sixth decoding coefficient, multiply the first timeslot of the sixth signal and the seventh decoding coefficient, multiply the second timeslot of the sixth signal and the eighth decoding coefficient, and add multiplying results to each other to obtain the second decoded signal.

Optionally, the equalization unit 212 is specifically configured to:

in time domain, perform equalization processing on the first signal and the second signal by using the equalization coefficient.

Optionally, the equalization unit 212 is specifically configured to:

in frequency domain, perform equalization processing on the first signal and the second signal by using the equalization coefficient.

In practical application, the equalization unit 212 may be implemented by using a filter, and may be specifically implemented by using a transverse filter.

**Embodiment 4**

Embodiment 4 of the present invention provides a signal decoding device, the device is applied to a MIMO system, the MIMO system includes a signal transmit end and a signal receive end, the signal receive end includes a first antenna and a second antenna, and the signal transmit end includes a third antenna and a fourth antenna.

The device includes a memory and a processor, the memory is configured to store a group of program instructions, and the processor is configured to invoke the program instructions stored in the memory, to perform the following operations:

obtaining a first signal received by the first antenna and a second signal received by the second antenna, where the first signal and the second signal are from the third antenna and the fourth antenna of the signal transmit end;

calculating a decoding coefficient by using a channel fading coefficient and a phase noise coefficient that are obtained by performing channel estimation based on the first signal and the second signal, where the channel fading coefficient includes channel fading coefficients respectively corresponding to four channels formed between the first antenna, the second antenna, the third antenna, and the fourth antenna, the phase noise coefficient includes a phase noise coefficient of the signal transmit end and a phase noise coefficient of the signal receive end, and a phase noise corresponding to the phase noise coefficient of the signal transmit end and a phase noise corresponding to the phase noise coefficient of the signal receive end are independent of each other; and

decoding the first signal and the second signal by using the decoding coefficient, to respectively obtain a first decoded signal and a second decoded signal, where the first decoded signal is related only to a transmit signal corresponding to the third antenna and is unrelated to a transmit signal corresponding to the fourth antenna, the second decoded signal is related only to the transmit signal corresponding to the fourth antenna and is unrelated to the transmit signal corresponding to the third antenna, and the transmit signal is a signal before encoding.

Optionally, the processor may be a central processing unit (Central Processing Unit, CPU), and the memory may be an internal memory of a random access memory (Random Access Memory, RAM) type. The processor and the memory may be integrated into one or more independent circuits or hardware, for example, an application-specific integrated circuit (Application-Specific Integrated Circuit, ASIC).

A person of ordinary skill in the art may understand that all or some of the steps of the method embodiments may be implemented by a program instructing relevant hardware. The program may be stored in a computer readable storage medium. When the program runs, the steps of the method embodiments are performed. The storage medium may be at least one of the following media: media that are capable of storing program code, such as a read-only memory (English: read-only memory, ROM for short), a RAM, a magnetic disk, or an optical disc.

It should be noted that the embodiments in this specification are all described in a progressive manner, for same or similar parts in the embodiments, refer to these embodiments, and each embodiment focuses on a difference from other embodiments. Especially, device and system embodiments are basically similar to a method embodiment, and therefore are described briefly. For related parts, refer to partial descriptions in the method embodiment. The described device and system embodiments are merely examples. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of the embodiments. A person of ordinary skill in the art may understand and implement the embodiments of the present invention without creative efforts.

The foregoing descriptions are merely examples of specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A signal decoding method, wherein the method is applied to a Multiple-Input Multiple-Output, MIMO, system, the MIMO system comprises a signal transmit end and a signal receive end, the signal receive end comprises a first antenna and a second antenna, and the signal transmit end comprises a third antenna and a fourth antenna; and the method comprises:

   obtaining (S101) a first signal received by the first antenna and a second signal received by the second antenna, wherein the first signal and the second signal are from the third antenna and the fourth antenna of the signal transmit end;
   calculating (S102) a decoding coefficient by using a channel fading coefficient and a phase noise coefficient that are obtained by performing channel estimation based on the first signal and the second signal, wherein the channel fading coefficient comprises channel fading coefficients respectively corresponding to four channels formed between the first antenna, the second antenna, the third antenna, and the fourth antenna, and the phase noise coefficient comprises a phase noise coefficient of the signal transmit end and a phase noise coefficient of the signal receive end; and
   decoding (S103) the first signal and the second signal by using the decoding coefficient, to respectively obtain a first decoded signal and a second decoded signal, wherein the first decoded signal is related only to a transmit signal corresponding to the third antenna and is unrelated to a transmit signal corresponding to the fourth antenna, the second decoded signal is related only to the transmit signal corresponding to the fourth antenna and is unrelated to the transmit signal corresponding to the third antenna, and the transmit signal is a signal before encoding;
   wherein the calculating a decoding coefficient by using a channel fading coefficient and a phase noise coefficient that are obtained by performing channel estimation based on the first signal and the second signal comprises:

      calculating (S202) an equalization coefficient by using the channel fading coefficient obtained by performing channel estimation for a first time based on the first signal and the second signal;
      performing (S203) equalization processing on the first signal and the second signal by using the equalization coefficient; and
      calculating (S204) the decoding coefficient by using the phase noise coefficient obtained by performing channel estimation for a second time on a signal obtained after equalization processing, wherein the performing channel estimation for a first time for obtaining the channel fading coefficient is performed at a longer interval than the performing channel estimation for a second time for obtaining the phase noise coefficient.

2. The method according to claim 1, wherein the first signal and the second signal correspond to a same timeslot, and the timeslot comprises a first timeslot and a second timeslot;
   the calculating an equalization coefficient by using the channel fading coefficient obtained by performing channel estimation based on the first signal and the second signal comprises:

      calculating a first group of equalization coefficients and a second group of equalization coefficients by using the channel fading coefficient obtained by performing channel estimation based on the first signal and the second signal; and

the performing equalization processing on the first signal and the second signal by using the equalization coefficient comprises:

preprocessing the first signal and the second signal to obtain a first group of four signals and a second group of four signals, wherein the first group of four signals and the second group of four signals each comprise the first timeslot of the first signal, a conjugate of the second timeslot of the first signal, the first timeslot of the second signal, and a conjugate of the second timeslot of the second signal;

filtering the first group of four signals by using the first group of equalization coefficients to obtain a third signal and a fourth signal, wherein the third signal and the fourth signal each correspond to the timeslot; and

filtering the second group of four signals by using the second group of equalization coefficients to obtain a fifth signal and a sixth signal, wherein the fifth signal and the sixth signal each correspond to the timeslot.

3. The method according to claim 2, wherein the first group of equalization coefficients comprise a first equalization coefficient, a second equalization coefficient, a third equalization coefficient, and a fourth equalization coefficient; and

the filtering the first group of four signals by using the first group of equalization coefficients to obtain a third signal and a fourth signal comprises:

filtering the first timeslot of the first signal by using the first equalization coefficient, to obtain the first timeslot of the third signal;

filtering the conjugate of the second timeslot of the first signal by using the second equalization coefficient, to obtain the second timeslot of the third signal;

filtering the first timeslot of the second signal by using the third equalization coefficient, to obtain the first timeslot of the fourth signal; and

filtering the conjugate of the second timeslot of the second signal by using the fourth equalization coefficient, to obtain the second timeslot of the fourth signal.

4. The method according to claim 2, wherein the second group of equalization coefficients comprise a fifth equalization coefficient, a sixth equalization coefficient, a seventh equalization coefficient, and an eighth equalization coefficient; and

the filtering the second group of four signals by using the second group of equalization coefficients to obtain a fifth signal and a sixth signal comprises:

filtering the first timeslot of the first signal by using the fifth equalization coefficient, to obtain the first timeslot of the fifth signal;

filtering the conjugate of the second timeslot of the first signal by using the sixth equalization coefficient, to obtain the second timeslot of the fifth signal;

filtering the first timeslot of the second signal by using the seventh equalization coefficient, to obtain the first timeslot of the sixth signal; and

filtering the conjugate of the second timeslot of the second signal by using the eighth equalization coefficient, to obtain the second timeslot of the sixth signal.

5. The method according to claim 1, wherein the performing equalization processing on the first signal and the second signal by using the equalization coefficient comprises:
in time domain, performing equalization processing on the first signal and the second signal by using the equalization coefficient.

6. The method according to claim 1, wherein the performing equalization processing on the first signal and the second signal by using the equalization coefficient comprises:
in frequency domain, performing equalization processing on the first signal and the second signal by using the equalization coefficient.

7. A signal decoding apparatus, wherein the apparatus is applied to a Multiple-Input Multiple-Output, MIMO, system, the MIMO system comprises a signal transmit end and a signal receive end, the signal receive end comprises a first antenna and a second antenna, and the signal transmit end comprises a third antenna and a fourth antenna; and the apparatus comprises:

a signal obtaining unit (11), a decoding coefficient calculation unit (21), and a decoding unit (31), wherein the signal obtaining unit (11) is configured to obtain a first signal received by the first antenna and a second signal received by the second antenna, wherein the first signal and the second signal are from the third antenna and the fourth antenna of the signal transmit end;

the decoding coefficient calculation unit (21) is configured to calculate a decoding coefficient by using a channel fading coefficient and a phase noise coefficient that are obtained by performing channel estimation based on the first signal and the second signal, wherein the channel fading coefficient comprises channel fading coefficients respectively corresponding to four channels formed between the first antenna, the second antenna, the third antenna, and the fourth antenna, and the phase noise coefficient comprises a phase noise coefficient of the signal transmit end and a phase noise coefficient of the signal receive end; and

the decoding unit (31) is configured to decode the first signal and the second signal by using the decoding coefficient, to respectively obtain a first decoded signal and a second decoded signal, wherein the first decoded signal is related only to a transmit signal corresponding to the third antenna and is unrelated to a transmit signal corresponding to the fourth antenna, the second decoded signal is related only to the transmit signal corresponding to the fourth antenna and is unrelated to the transmit signal corresponding to the third antenna, and the transmit signal is a signal before encoding;

wherein the decoding coefficient calculation unit (21) specifically comprises:

an equalization coefficient calculation unit (211), an equalization unit (212), and a decoding coefficient calculation subunit (213), wherein

the equalization coefficient calculation unit (211) is configured to calculate an equalization coefficient by using the channel fading coefficient obtained by performing channel estimation for a first time based on the first signal and the second signal;

the equalization unit (212) is configured to perform equalization processing on the first signal and the second signal by using the equalization coefficient; and

the decoding coefficient calculation subunit (213) is configured to calculate the decoding coefficient by using the phase noise coefficient obtained by performing channel estimation for a second time on a signal obtained after equalization processing, wherein the performing channel estimation for a first time for obtaining the channel fading coefficient is performed at a longer interval than the performing channel estimation for a second time for obtaining the phase noise coefficient.

8. The apparatus according to claim 7, wherein the first signal and the second signal correspond to a same timeslot, and the timeslot comprises a first timeslot and a second timeslot;

the equalization coefficient calculation unit (211) is specifically configured to calculate a first group of equalization coefficients and a second group of equalization coefficients by using the channel fading coefficient obtained by performing channel estimation based on the first signal and the second signal; and

the equalization unit (212) specifically comprises a preprocessing unit and a filter unit, and the filter unit comprises a first filter unit and a second filter unit, wherein

the preprocessing unit is configured to preprocess the first signal and the second signal to obtain a first group of four signals and a second group of four signals, wherein the first group of four signals and the second group of four signals each comprise the first timeslot of the first signal, a conjugate of the second timeslot of the first signal, the first timeslot of the second signal, and a conjugate of the second timeslot of the second signal;

the first filter unit is configured to filter the first group of four signals by using the first group of equalization coefficients to obtain a third signal and a fourth signal, wherein the third signal and the fourth signal each correspond to the timeslot; and

the second filter unit is configured to filter the second group of four signals by using the second group of equalization coefficients to obtain a fifth signal and a sixth signal, wherein the fifth signal and the sixth signal each correspond to the timeslot.

9. The apparatus according to claim 8, wherein the first group of equalization coefficients comprise a first equalization coefficient, a second equalization coefficient, a third equalization coefficient, and a fourth equalization coefficient; and the first filter unit is specifically configured to:

filter the first timeslot of the first signal by using the first equalization coefficient, to obtain the first timeslot of the third signal;

filter the conjugate of the second timeslot of the first signal by using the second equalization coefficient, to obtain the second timeslot of the third signal;

filter the first timeslot of the second signal by using the third equalization coefficient, to obtain the first timeslot of the fourth signal; and

filter the conjugate of the second timeslot of the second signal by using the fourth equalization coefficient, to obtain the second timeslot of the fourth signal.

10. The apparatus according to claim 9, wherein the first equalization coefficient $W_{11} = \dfrac{1}{h_{11}}$, the second equalization coefficient $W_{12} = \dfrac{1}{h_{12}^*}$, the third equalization coefficient $W_{13} = \dfrac{1}{h_{21}}$, and the fourth equalization coefficient $W_{14} = \dfrac{1}{h_{22}^*}$, wherein

$h_{11}$ is a channel fading coefficient from the third antenna to the first antenna, $h_{12}^*$ is a conjugate of $h_{12}$, $h_{12}$ is a channel fading coefficient from the fourth antenna to the first antenna, $h_{21}$ is a channel fading coefficient from the third antenna to the second antenna, $h_{22}^*$ is a conjugate of $h_{22}$, and $h_{22}$ is a channel fading coefficient from the fourth antenna to the second antenna.

11. The apparatus according to claim 8, wherein the second group of equalization coefficients comprise a fifth equalization coefficient, a sixth equalization coefficient, a seventh equalization coefficient, and an eighth equalization coefficient; and

the second filter unit is specifically configured to:

filter the first timeslot of the first signal by using the fifth equalization coefficient, to obtain the first timeslot of the fifth signal;

filter the conjugate of the second timeslot of the first signal by using the sixth equalization coefficient, to obtain the second timeslot of the fifth signal;

filter the first timeslot of the second signal by using the seventh equalization coefficient, to obtain the first timeslot of the sixth signal; and

filter the conjugate of the second timeslot of the second signal by using the eighth equalization coefficient, to obtain the second timeslot of the sixth signal.

12. The apparatus according to claim 7, wherein the equalization unit (212) is specifically configured to:

in time domain, perform equalization processing on the first signal and the second signal by using the equalization coefficient.

13. The apparatus according to claim 7, wherein the equalization unit (212) is specifically configured to:

in frequency domain, perform equalization processing on the first signal and the second signal by using the equalization coefficient.

**Patentansprüche**

1. Signaldecodierungsverfahren, wobei das Verfahren auf ein Multiple-Input-Multiple-Output-(MIMO-)System angewandt wird, wobei das MIMO-System ein Signalübertragungsende und ein Signalempfangsende umfasst, wobei das Signalempfangsende eine erste Antenne und eine zweite Antenne umfasst und das Signalübertragungsende eine dritte Antenne und eine vierte Antenne umfasst; und

wobei das Verfahren Folgendes umfasst:

Erhalten (S101) eines ersten Signals, das durch die erste Antenne empfangen wird, und eines zweiten Signals, das durch die zweite Antenne empfangen wird, wobei das erste Signal und das zweite Signal von der dritten Antenne und der vierten Antenne des Signalübertragungsendes sind;

Berechnen (S102) eines Decodierungskoeffizienten durch Verwenden eines Kanal-Fading-Koeffizienten und eines Phasenrauschkoeffizienten, die erhalten werden, indem Kanalschätzung basierend auf dem ersten Signal und dem zweiten Signal durchgeführt wird, wobei der Kanal-Fading-Koeffizient Kanal-Fading-Koeffizienten umfasst, die jeweils vier Kanälen entsprechen, die zwischen der ersten Antenne, der zweiten Antenne, der dritten Antenne und der vierten Antenne gebildet sind, und der Phasenrauschkoeffizient einen Phasenrauschkoeffizienten des Signalübertragungsendes und einen Phasenrauschkoeffizienten des Signalempfangsendes umfasst; und

Decodieren (S103) des ersten Signals und des zweiten Signals durch Verwenden des Decodierungskoeffizienten, um jeweils ein erstes decodiertes Signal und ein zweites decodiertes Signal zu erhalten, wobei das erste decodierte Signal ausschließlich ein Übertragungssignal betrifft, das der dritten Antenne entspricht und kein Übertragungssignal betrifft, das der vierten Antenne entspricht, wobei das zweite decodierte Signal ausschließlich das Übertragungssignal betrifft, das der vierten Antenne entspricht und nicht das Übertragungssignal betrifft, das der dritten Antenne entspricht, und das Übertragungssignal ein Signal vor dem Codieren ist; wobei das Berechnen eines Decodierungskoeffizienten durch Verwenden eines Kanal-Fading-Koeffizienten und eines Phasenrauschkoeffizienten, die erhalten werden, indem Kanalschätzung basierend auf dem ersten Signal und dem zweiten Signal durchgeführt wird, Folgendes umfasst:

Berechnen (S202) eines Ausgleichskoeffizienten durch Verwenden des Kanal-Fading-Koeffizienten, der erhalten wird, indem Kanalschätzung für eine erste Zeit basierend auf dem ersten Signal und dem zweiten Signal durchgeführt wird;
Durchführen (S203) von Ausgleichsverarbeitung an dem ersten Signal und dem zweiten Signal durch Verwenden des Ausgleichskoeffizienten; und
Berechnen (S204) des Decodierungskoeffizienten durch Verwenden des Phasenrauschkoeffizienten, der erhalten wird, indem Kanalschätzung für eine zweite Zeit an einem Signal durchgeführt wird, das nach Ausgleichsverarbeitung erhalten wird, wobei das Durchführen von Kanalschätzung für eine erste Zeit, um den Kanal-Fading-Koeffizienten zu erhalten, in einem längeren Intervall durchgeführt wird als das Durchführen von Kanalschätzung für eine zweite Zeit, um den Phasenrauschkoeffizienten zu erhalten.

2. Verfahren nach Anspruch 1, wobei das erste Signal und das zweite Signal einem gleichen Zeitfenster entsprechen und das Zeitfenster ein erstes Zeitfenster und ein zweites Zeitfenster umfasst;
wobei das Berechnen eines Ausgleichskoeffizienten durch Verwenden des Kanal-Fading-Koeffizienten, der erhalten wird, indem Kanalschätzung basierend auf dem ersten Signal und dem zweiten Signal durchgeführt wird, Folgendes umfasst:

Berechnen einer ersten Gruppe von Ausgleichskoeffizienten und einer zweiten Gruppe von Ausgleichskoeffizienten durch Verwenden des Kanal-Fading-Koeffizienten, der erhalten wird, indem Kanalschätzung basierend auf dem ersten Signal und dem zweiten Signal durchgeführt wird; und
wobei das Durchführen von Ausgleichsverarbeitung an dem ersten Signal und dem zweiten Signal durch Verwenden des Ausgleichskoeffizienten Folgendes umfasst:

Vorverarbeiten des ersten Signals und des zweiten Signals, um eine erste Gruppe von vier Signalen und eine zweite Gruppe von vier Signalen zu erhalten, wobei die erste Gruppe von vier Signalen und die zweite Gruppe von vier Signalen jeweils das erste Zeitfenster des ersten Signals, ein Konjugat des zweiten Zeitfensters des ersten Signals, das erste Zeitfenster des zweiten Signals und ein Konjugat des zweiten Zeitfensters des zweiten Signals umfassen;
Filtern der ersten Gruppe von vier Signalen durch Verwenden der ersten Gruppe von Ausgleichskoeffizienten, um ein drittes Signal und ein viertes Signal zu erhalten, wobei das dritte Signal und das vierte Signal jeweils dem Zeitfenster entsprechen; und
Filtern der zweiten Gruppe von vier Signalen durch Verwenden der zweiten Gruppe von Ausgleichskoeffizienten, um ein fünftes Signal und ein sechstes Signal zu erhalten, wobei das fünfte Signal und das sechste Signal jeweils dem Zeitfenster entsprechen.

3. Verfahren nach Anspruch 2, wobei die erste Gruppe von Ausgleichskoeffizienten einen ersten Ausgleichskoeffizienten, einen zweiten Ausgleichskoeffizienten, einen dritten Ausgleichskoeffizienten und einen vierten Ausgleichskoeffizienten umfasst; und
wobei das Filtern der ersten Gruppe von vier Signalen durch Verwenden der ersten Gruppe von Ausgleichskoeffizienten, um ein drittes Signal und ein viertes Signal zu erhalten, Folgendes umfasst:

Filtern des ersten Zeitfensters des ersten Signals durch Verwenden des ersten Ausgleichskoeffizienten, um das erste Zeitfenster des dritten Signals zu erhalten;
Filtern des Konjugats des zweiten Zeitfensters des ersten Signals durch Verwenden des zweiten Ausgleichskoeffizienten, um das zweite Zeitfenster des dritten Signals zu erhalten;

Filtern des ersten Zeitfensters des zweiten Signals durch Verwenden des dritten Ausgleichskoeffizienten, um das erste Zeitfenster des vierten Signals zu erhalten; und

Filtern des Konjugats des zweiten Zeitfensters des zweiten Signals durch Verwenden des vierten Ausgleichskoeffizienten, um das zweite Zeitfenster des vierten Signals zu erhalten.

4. Verfahren nach Anspruch 2, wobei die zweite Gruppe von Ausgleichskoeffizienten einen fünften Ausgleichskoeffizienten, einen sechsten Ausgleichskoeffizienten, einen siebten Ausgleichskoeffizienten und einen achten Ausgleichskoeffizienten umfasst; und

wobei das Filtern der zweiten Gruppe von vier Signalen durch Verwenden der zweiten Gruppe von Ausgleichskoeffizienten, um ein fünftes Signal und ein sechstes Signal zu erhalten, Folgendes umfasst:

Filtern des ersten Zeitfensters des ersten Signals durch Verwenden des fünften Ausgleichskoeffizienten, um das erste Zeitfenster des fünften Signals zu erhalten;

Filtern des Konjugats des zweiten Zeitfensters des ersten Signals durch Verwenden des sechsten Ausgleichskoeffizienten, um das zweite Zeitfenster des fünften Signals zu erhalten;

Filtern des ersten Zeitfensters des zweiten Signals durch Verwenden des siebten Ausgleichskoeffizienten, um das erste Zeitfenster des sechsten Signals zu erhalten; und

Filtern des Konjugats des zweiten Zeitfensters des zweiten Signals durch Verwenden des achten Ausgleichskoeffizienten, um das zweite Zeitfenster des sechsten Signals zu erhalten.

5. Verfahren nach Anspruch 1, wobei das Durchführen von Ausgleichsverarbeitung an dem ersten Signal und dem zweiten Signal durch Verwenden des Ausgleichskoeffizienten Folgendes umfasst:

in der Zeitdomäne, Durchführen von Ausgleichsverarbeitung an dem ersten Signal und dem zweiten Signal durch Verwenden des Ausgleichskoeffizienten.

6. Verfahren nach Anspruch 1, wobei das Durchführen von Ausgleichsverarbeitung an dem ersten Signal und dem zweiten Signal durch Verwenden des Ausgleichskoeffizienten Folgendes umfasst:

in der Frequenzdomäne, Durchführen von Ausgleichsverarbeitung an dem ersten Signal und dem zweiten Signal durch Verwenden des Ausgleichskoeffizienten.

7. Signaldecodierungsvorrichtung, wobei die Vorrichtung auf ein Multiple-Input-Multiple-Output-(MIMO-)System angewandt wird, wobei das MIMO-System ein Signalübertragungsende und ein Signalempfangsende umfasst, wobei das Signalempfangsende eine erste Antenne und eine zweite Antenne umfasst und das Signalübertragungsende eine dritte Antenne und eine vierte Antenne umfasst; und

wobei die Vorrichtung Folgendes umfasst:

eine Signalerhaltungseinheit (11), eine Decodierungskoeffizientenberechnungseinheit (21) und eine Decodierungseinheit (31), wobei

die Signalerhaltungseinheit (11) konfiguriert ist, um ein erstes Signal, das durch die erste Antenne empfangen wird, und ein zweites Signal, das durch die zweite Antenne empfangen wird, zu erhalten, wobei das erste Signal und das zweite Signal von der dritten Antenne und der vierten Antenne des Signalübertragungsendes sind;

die Decodierungskoeffizientenberechnungseinheit (21) konfiguriert ist, um einen Decodierungskoeffizienten durch Verwenden eines Kanal-Fading-Koeffizienten und eines Phasenrauschkoeffizienten zu berechnen, die erhalten werden, indem Kanalschätzung basierend auf dem ersten Signal und dem zweiten Signal durchgeführt wird, wobei der Kanal-Fading-Koeffizient Kanal-Fading-Koeffizienten umfasst, die jeweils vier Kanälen entsprechen, die zwischen der ersten Antenne, der zweiten Antenne, der dritten Antenne und der vierten Antenne gebildet sind, und der Phasenrauschkoeffizient einen Phasenrauschkoeffizienten des Signalübertragungsendes und einen Phasenrauschkoeffizienten des Signalempfangsendes umfasst; und

die Decodierungseinheit (31) konfiguriert ist, um das erste Signal und das zweite Signal durch Verwenden des Decodierungskoeffizienten zu decodieren, um jeweils ein erstes decodiertes Signal und ein zweites decodiertes Signal zu erhalten, wobei das erste decodierte Signal ausschließlich ein Übertragungssignal betrifft, das der dritten Antenne entspricht und kein Übertragungssignal betrifft, das der vierten Antenne entspricht, wobei das zweite decodierte Signal ausschließlich das Übertragungssignal betrifft, das der vierten Antenne entspricht und nicht das Übertragungssignal betrifft, das der dritten Antenne entspricht, und das Übertragungssignal ein Signal vor dem Codieren ist;

wobei die Decodierungskoeffizientenberechnungseinheit (21) insbesondere Folgendes umfasst:

eine Ausgleichskoeffizientenberechnungseinheit (211), eine Ausgleichseinheit (212) und eine Decodierungskoeffizientenberechnungsteileinheit (213), wobei die Ausgleichskoeffizientenberechnungseinheit (211) konfiguriert ist, um einen Ausgleichskoeffizienten durch Verwenden des Kanal-Fading-Koeffizienten zu berechnen, der erhalten wird, indem Kanalschätzung für eine erste Zeit basierend auf dem ersten Signal und dem zweiten Signal durchgeführt wird;

die Ausgleichseinheit (212) konfiguriert ist, um Ausgleichsverarbeitung an dem ersten Signal und dem zweiten Signal durch Verwenden des Ausgleichskoeffizienten durchzuführen; und

die Decodierungskoeffizientenberechnungsteileinheit (213) konfiguriert ist, um den Decodierungskoeffizienten durch Verwenden des Phasenrauschkoeffizienten zu berechnen, der erhalten wird, indem Kanalschätzung für eine zweite Zeit an einem Signal durchgeführt wird, das nach Ausgleichsverarbeitung erhalten wird, wobei das Durchführen von Kanalschätzung für eine erste Zeit, um den Kanal-Fading-Koeffizienten zu erhalten, in einem längeren Zeitintervall durchgeführt wird als das Durchführen von Kanalschätzung für eine zweite Zeit, um den Phasenrauschkoeffizienten zu erhalten.

8. Vorrichtung nach Anspruch 7, wobei das erste Signal und das zweite Signal einem gleichen Zeitfenster entsprechen und das Zeitfenster ein erstes Zeitfenster und ein zweites Zeitfenster umfasst;

wobei die Ausgleichskoeffizientenberechnungseinheit (211) insbesondere konfiguriert ist, um eine erste Gruppe von Ausgleichskoeffizienten und eine zweite Gruppe von Ausgleichskoeffizienten durch Verwenden des Kanal-Fading-Koeffizienten zu berechnen, der erhalten wird, indem Kanalschätzung basierend auf dem ersten Signal und dem zweiten Signal durchgeführt wird; und

wobei die Ausgleichseinheit (212) insbesondere eine Vorverarbeitungseinheit und eine Filtereinheit umfasst und die Filtereinheit eine erste Filtereinheit und eine zweite Filtereinheit umfasst, wobei

die Vorverarbeitungseinheit konfiguriert ist, um das erste Signal und das zweite Signal vorzuverarbeiten, um eine erste Gruppe von vier Signalen und eine zweite Gruppe von vier Signalen zu erhalten, wobei die erste Gruppe von vier Signalen und die zweite Gruppe von vier Signalen jeweils das erste Zeitfenster des ersten Signals, ein Konjugat des zweiten Zeitfensters des ersten Signals, das erste Zeitfenster des zweiten Signals und ein Konjugat des zweiten Zeitfensters des zweiten Signals umfassen;

die erste Filtereinheit konfiguriert ist, um die erste Gruppe von vier Signalen durch Verwenden der ersten Gruppe von Ausgleichskoeffizienten zu filtern, um ein drittes Signal und ein viertes Signal zu erhalten, wobei das dritte Signal und das vierte Signal jeweils dem Zeitfenster entsprechen; und

die zweite Filtereinheit konfiguriert ist, um die zweite Gruppe von vier Signalen durch Verwenden der zweiten Gruppe von Ausgleichskoeffizienten zu filtern, um ein fünftes Signal und ein sechstes Signal zu erhalten, wobei das fünfte Signal und das sechste Signal jeweils dem Zeitfenster entsprechen.

9. Vorrichtung nach Anspruch 8, wobei die erste Gruppe von Ausgleichskoeffizienten einen ersten Ausgleichskoeffizienten, einen zweiten Ausgleichskoeffizienten, einen dritten Ausgleichskoeffizienten und einen vierten Ausgleichskoeffizienten umfasst; und

wobei die erste Filtereinheit insbesondere für Folgendes konfiguriert ist:

Filtern des ersten Zeitfensters des ersten Signals durch Verwenden des ersten Ausgleichskoeffizienten, um das erste Zeitfenster des dritten Signals zu erhalten;

Filtern des Konjugats des zweiten Zeitfensters des ersten Signals durch Verwenden des zweiten Ausgleichskoeffizienten, um das zweite Zeitfenster des dritten Signals zu erhalten;

Filtern des ersten Zeitfensters des zweiten Signals durch Verwenden des dritten Ausgleichskoeffizienten, um das erste Zeitfenster des vierten Signals zu erhalten; und

Filtern des Konjugats des zweiten Zeitfensters des zweiten Signals durch Verwenden des vierten Ausgleichskoeffizienten, um das zweite Zeitfenster des vierten Signals zu erhalten.

10. Vorrichtung nach Anspruch 9, wobei der erste Ausgleichskoeffizient $W_{11} = \dfrac{1}{h_{11}}$, der zweite Ausgleichskoeffizient $W_{12} = \dfrac{1}{h_{12}^*}$, der dritte Ausgleichskoeffizient $W_{13} = \dfrac{1}{h_{21}}$ und der Ausgleichskoeffizient

$$W_{14} = \frac{1}{h_{12}^{*}}$$

, wobei $h_{11}$ ein Kanal-Fading-Koeffizient von der dritten Antenne zu der ersten Antenne ist, $h_{12}^{*}$ ein Konjugat von $h_{12}$ ist, $h_{12}$ ein Kanal-Fading-Koeffizient von der vierten Antenne zu der ersten Antenne ist, $h_{21}$ ein Kanal-Fading-Koeffizient von der dritten Antenne zu der zweiten Antenne ist, $h_{22}^{*}$ ein Konjugat von $h_{22}$ ist, und $h_{22}$ ein Kanal-Fading-Koeffizient von der vierten Antenne zu der zweiten Antenne ist.

11. Vorrichtung nach Anspruch 8, wobei die zweite Gruppe von Ausgleichskoeffizienten einen fünften Ausgleichskoeffizienten, einen sechsten Ausgleichskoeffizienten, einen siebten Ausgleichskoeffizienten und einen achten Ausgleichskoeffizienten umfasst; und
wobei die zweite Filtereinheit insbesondere für Folgendes konfiguriert ist:

Filtern des ersten Zeitfensters des ersten Signals durch Verwenden des fünften Ausgleichskoeffizienten, um das erste Zeitfenster des fünften Signals zu erhalten;
Filtern des Konjugats des zweiten Zeitfensters des ersten Signals durch Verwenden des sechsten Ausgleichskoeffizienten, um das zweite Zeitfenster des fünften Signals zu erhalten;
Filtern des ersten Zeitfensters des zweiten Signals durch Verwenden des siebten Ausgleichskoeffizienten, um das erste Zeitfenster des sechsten Signals zu erhalten; und
Filtern des Konjugats des zweiten Zeitfensters des zweiten Signals durch Verwenden des achten Ausgleichskoeffizienten, um das zweite Zeitfenster des sechsten Signals zu erhalten.

12. Vorrichtung nach Anspruch 7, wobei die Ausgleichseinheit (212) insbesondere für Folgendes konfiguriert ist:
in der Zeitdomäne, Durchführen von Ausgleichsverarbeitung an dem ersten Signal und dem zweiten Signal durch Verwenden des Ausgleichskoeffizienten.

13. Vorrichtung nach Anspruch 7, wobei die Ausgleichseinheit (212) insbesondere für Folgendes konfiguriert ist:
in der Frequenzdomäne, Durchführen von Ausgleichsverarbeitung an dem ersten Signal und dem zweiten Signal durch Verwenden des Ausgleichskoeffizienten.

**Revendications**

1. Procédé de décodage de signal, dans lequel le procédé est appliqué à un système à entrées multiples et sorties multiples, MIMO, le système MIMO comprend une extrémité de transmission de signal et une extrémité de réception de signal, l'extrémité de réception de signal comprend une première antenne et une deuxième antenne, et l'extrémité de transmission de signal comprend une troisième antenne et une quatrième antenne ; et
le procédé comprend :

l'obtention (S101) d'un premier signal reçu par la première antenne et d'un deuxième signal reçu par la deuxième antenne, dans lequel le premier signal et le deuxième signal proviennent de la troisième antenne et de la quatrième antenne de l'extrémité de transmission de signal ;
le calcul (S102) d'un coefficient de décodage en utilisant un coefficient d'évanouissement de canal et un coefficient de bruit de phase qui sont obtenus par la réalisation d'une estimation de canal d'après le premier signal et le deuxième signal, dans lequel le coefficient d'évanouissement de canal comprend des coefficients d'évanouissement de canal correspondant respectivement à quatre canaux formés entre la première antenne, la deuxième antenne, la troisième antenne et la quatrième antenne, et le coefficient de bruit de phase comprend un coefficient de bruit de phase de l'extrémité de transmission de signal et un coefficient de bruit de phase de l'extrémité de réception de signal ; et
le décodage (S103) du premier signal et du deuxième signal en utilisant le coefficient de décodage, pour obtenir respectivement un premier signal décodé et un deuxième signal décodé, dans lequel le premier signal décodé est lié uniquement à un signal de transmission correspondant à la troisième antenne et est non lié à un signal de transmission correspondant à la quatrième antenne, le deuxième signal décodé est lié uniquement au signal de transmission correspondant à la quatrième antenne et est non lié au signal de transmission correspondant à la troisième antenne, et le signal de transmission est un signal avant encodage ;
dans lequel le calcul d'un coefficient de décodage en utilisant un coefficient d'évanouissement de canal et un coefficient de bruit de phase qui sont obtenus par la réalisation d'une estimation de canal d'après le premier signal et le deuxième signal comprend :

le calcul (S202) d'un coefficient d'égalisation en utilisant le coefficient d'évanouissement de canal obtenu par la réalisation d'une estimation de canal une première fois d'après le premier signal et le deuxième signal ;
la réalisation (S203) d'un traitement d'égalisation sur le premier signal et le deuxième signal en utilisant le coefficient d'égalisation ; et
le calcul (S204) du coefficient de décodage en utilisant le coefficient de bruit de phase obtenu par la réalisation d'une estimation de canal une seconde fois sur un signal obtenu après un traitement d'égalisation, dans lequel la réalisation d'une estimation de canal une première fois pour obtenir le coefficient d'évanouissement de canal est réalisée à un intervalle plus long que la réalisation d'une estimation de canal une seconde fois pour obtenir le coefficient de bruit de phase.

2. Procédé selon la revendication 1, dans lequel le premier signal et le deuxième signal correspondent à un même créneau temporel, et le créneau temporel comprend un premier créneau temporel et un second créneau temporel ;
le calcul d'un coefficient d'égalisation en utilisant le coefficient d'évanouissement de canal obtenu par la réalisation d'une estimation de canal d'après le premier signal et le deuxième signal comprend :

le calcul d'un premier groupe de coefficients d'égalisation et d'un second groupe de coefficients d'égalisation en utilisant le coefficient d'évanouissement de canal obtenu par la réalisation d'une estimation de canal d'après le premier signal et le deuxième signal ; et
la réalisation d'un traitement d'égalisation sur le premier signal et le deuxième signal en utilisant le coefficient d'égalisation comprend :

le prétraitement du premier signal et du deuxième signal pour obtenir un premier groupe de quatre signaux et un second groupe de quatre signaux, dans lequel le premier groupe de quatre signaux et le second groupe de quatre signaux comprennent chacun le premier créneau temporel du premier signal, un conjugué du second créneau temporel du premier signal, le premier créneau temporel du deuxième signal, et un conjugué du second créneau temporel du deuxième signal ;
le filtrage du premier groupe de quatre signaux en utilisant le premier groupe de coefficients d'égalisation pour obtenir un troisième signal et un quatrième signal, dans lequel le troisième signal et le quatrième signal correspondent chacun au créneau temporel ; et
le filtrage du second groupe de quatre signaux en utilisant le second groupe de coefficients d'égalisation pour obtenir un cinquième signal et un sixième signal, dans lequel le cinquième signal et le sixième signal correspondent chacun au créneau temporel.

3. Procédé selon la revendication 2, dans lequel le premier groupe de coefficients d'égalisation comprend un premier coefficient d'égalisation, un deuxième coefficient d'égalisation, un troisième coefficient d'égalisation et un quatrième coefficient d'égalisation ; et
le filtrage du premier groupe de quatre signaux en utilisant le premier groupe de coefficients d'égalisation pour obtenir un troisième signal et un quatrième signal comprend :

le filtrage du premier créneau temporel du premier signal en utilisant le premier coefficient d'égalisation, pour obtenir le premier créneau temporel du troisième signal ;
le filtrage du conjugué du second créneau temporel du premier signal en utilisant le deuxième coefficient d'égalisation, pour obtenir le second créneau temporel du troisième signal ;
le filtrage du premier créneau temporel du deuxième signal en utilisant le troisième coefficient d'égalisation, pour obtenir le premier créneau temporel du quatrième signal ; et
le filtrage du conjugué du second créneau temporel du deuxième signal en utilisant le quatrième coefficient d'égalisation, pour obtenir le second créneau temporel du quatrième signal.

4. Procédé selon la revendication 2, dans lequel le second groupe de coefficients d'égalisation comprend un cinquième coefficient d'égalisation, un sixième coefficient d'égalisation, un septième coefficient d'égalisation et un huitième coefficient d'égalisation ; et
le filtrage du second groupe de quatre signaux en utilisant le deuxième groupe de coefficients d'égalisation pour obtenir un cinquième signal et un sixième signal comprend :

le filtrage du premier créneau temporel du premier signal en utilisant le cinquième coefficient d'égalisation, pour obtenir le premier créneau temporel du cinquième signal ;

le filtrage du conjugué du second créneau temporel du premier signal en utilisant le sixième coefficient d'égalisation, pour obtenir le second créneau temporel du cinquième signal ;

le filtrage du premier créneau temporel du deuxième signal en utilisant le septième coefficient d'égalisation, pour obtenir le premier créneau temporel du sixième signal ; et

le filtrage du conjugué du second créneau temporel du deuxième signal en utilisant le huitième coefficient d'égalisation, pour obtenir le second créneau temporel du sixième signal.

**5.** Procédé selon la revendication 1, dans lequel la réalisation d'un traitement d'égalisation sur le premier signal et le deuxième signal en utilisant le coefficient d'égalisation comprend :

dans le domaine temporel, la réalisation d'un traitement d'égalisation sur le premier signal et le deuxième signal en utilisant le coefficient d'égalisation.

**6.** Procédé selon la revendication 1, dans lequel la réalisation d'un traitement d'égalisation sur le premier signal et le deuxième signal en utilisant le coefficient d'égalisation comprend :

dans le domaine de fréquence, la réalisation d'un traitement d'égalisation sur le premier signal et le deuxième signal en utilisant le coefficient d'égalisation.

**7.** Appareil de décodage de signal, dans lequel l'appareil est appliqué à un système à entrées multiples et sorties multiples, MIMO, le système MIMO comprend une extrémité de transmission de signal et une extrémité de réception de signal, l'extrémité de réception de signal comprend une première antenne et une deuxième antenne, et l'extrémité de transmission de signal comprend une troisième antenne et une quatrième antenne ; et l'appareil comprend :

une unité d'obtention de signal (11), une unité de calcul de coefficient de décodage (21) et une unité de décodage (31), dans lequel

l'unité d'obtention de signal (11) est conçue pour obtenir un premier signal reçu par la première antenne et un deuxième signal reçu par la deuxième antenne, dans lequel le premier signal et le deuxième signal proviennent de la troisième antenne et de la quatrième antenne de l'extrémité de transmission de signal ;

l'unité de calcul de coefficient de décodage (21) est conçue pour calculer un coefficient de décodage en utilisant un coefficient d'évanouissement de canal et un coefficient de bruit de phase qui sont obtenus par la réalisation d'une estimation de canal d'après le premier signal et le deuxième signal, dans lequel le coefficient d'évanouissement de canal comprend des coefficients d'évanouissement de canal correspondant respectivement à quatre canaux formés entre la première antenne, la deuxième antenne, la troisième antenne et la quatrième antenne, et le coefficient de bruit de phase comprend un coefficient de bruit de phase de l'extrémité de transmission de signal et un coefficient de bruit de phase de l'extrémité de réception de signal ; et

l'unité de décodage (31) est conçue pour décoder le premier signal et le deuxième signal en utilisant le coefficient de décodage, pour obtenir respectivement un premier signal décodé et un deuxième signal décodé, dans lequel le premier signal décodé est lié uniquement à un signal de transmission correspondant à la troisième antenne et est non lié à un signal de transmission correspondant à la quatrième antenne, le deuxième signal décodé est lié uniquement au signal de transmission correspondant à la quatrième antenne et est non lié au signal de transmission correspondant à la troisième antenne, et le signal de transmission est un signal avant encodage ;

dans lequel l'unité de calcul de coefficient de décodage (21) comprend spécifiquement :

une unité de calcul de coefficient d'égalisation (211), une unité d'égalisation (212) et une sous-unité de calcul de coefficient de décodage (213), dans lequel

l'unité de calcul de coefficient d'égalisation (211) est conçue pour calculer un coefficient d'égalisation en utilisant le coefficient d'évanouissement de canal obtenu par la réalisation d'une estimation de canal une première fois d'après le premier signal et le deuxième signal ;

l'unité d'égalisation (212) est conçue pour réaliser un traitement d'égalisation sur le premier signal et le deuxième signal en utilisant le coefficient d'égalisation ; et

la sous-unité de calcul de coefficient de décodage (213) est conçue pour calculer le coefficient de décodage en utilisant le coefficient de bruit de phase obtenu par la réalisation d'une estimation de canal une seconde fois sur un signal obtenu après un traitement d'égalisation, dans lequel la réalisation d'une estimation de canal une première fois pour obtenir le coefficient d'évanouissement de canal est réalisée à un intervalle plus long que la réalisation d'une estimation de canal une seconde fois pour obtenir le coefficient de bruit de phase.

**8.** Appareil selon la revendication 7, dans lequel le premier signal et le deuxième signal correspondent à un même créneau temporel, et le créneau temporel comprend un premier créneau temporel et un second créneau temporel ; l'unité de calcul de coefficient d'égalisation (211) est conçue spécifiquement pour calculer un premier groupe de coefficients d'égalisation et un second groupe de coefficients d'égalisation en utilisant le coefficient d'évanouissement de canal obtenu par la réalisation d'une estimation de canal d'après le premier signal et le deuxième signal ; et l'unité d'égalisation (212) comprend spécifiquement une unité de prétraitement et une unité de filtre, et l'unité de filtre comprend une première unité de filtre et une seconde unité de filtre, dans lequel

l'unité de prétraitement est conçue pour prétraiter le premier signal et le deuxième signal pour obtenir un premier groupe de quatre signaux et un second groupe de quatre signaux, dans lequel le premier groupe de quatre signaux et le second groupe de quatre signaux comprennent chacun le premier créneau temporel du premier signal, un conjugué du second créneau temporel du premier signal, le premier créneau temporel du deuxième signal et un conjugué du second créneau temporel du deuxième signal ;

la première unité de filtre est conçue pour filtrer le premier groupe de quatre signaux en utilisant le premier groupe de coefficients d'égalisation pour obtenir un troisième signal et un quatrième signal, dans lequel le troisième signal et le quatrième signal correspondent chacun au créneau temporel ; et la seconde unité de filtre est conçue pour filtrer le second groupe de quatre signaux en utilisant le second groupe de coefficients d'égalisation pour obtenir un cinquième signal et un sixième signal, dans lequel le cinquième signal et le sixième signal correspondent chacun au créneau temporel.

9. Appareil selon la revendication 8, dans lequel le premier groupe de coefficients d'égalisation comprend un premier coefficient d'égalisation, un deuxième coefficient d'égalisation, un troisième coefficient d'égalisation et un quatrième coefficient d'égalisation ; et

la première unité de filtre est conçue spécifiquement pour :

   filtrer le premier créneau temporel du premier signal en utilisant le premier coefficient d'égalisation, pour obtenir le premier créneau temporel du troisième signal ;

   filtrer le conjugué du second créneau temporel du premier signal en utilisant le deuxième coefficient d'égalisation, pour obtenir le second créneau temporel du troisième signal ;

   filtrer le premier créneau temporel du deuxième signal en utilisant le troisième coefficient d'égalisation, pour obtenir le premier créneau temporel du quatrième signal ; et

   filtrer le conjugué du second créneau temporel du deuxième signal en utilisant le quatrième coefficient d'égalisation, pour obtenir le second créneau temporel du quatrième signal.

$$W_{11} = \frac{1}{h_{11}}$$

10. Appareil selon la revendication 9, dans lequel le premier coefficient d'égalisation , le deuxième

coefficient d'égalisation $W_{12} = \frac{1}{h^*_{12}}$ , le troisième coefficient d'égalisation $W_{13} = \frac{1}{h_{21}}$ , et le quatrième coefficient d'égalisation $W_{14} = \frac{1}{h^*_{22}}$ , dans lequel $h_{11}$ est un coefficient d'évanouissement de canal de la troisième antenne à la première antenne, $h^*_{12}$ est un conjugué de $h_{12}$, $h_{12}$ est un coefficient d'évanouissement de canal de la quatrième antenne à la première antenne, $h_{21}$ est un coefficient d'évanouissement de canal de la troisième antenne à la deuxième antenne, $h^*_{22}$ est un conjugué de $h_{22}$, et $h_{22}$ est un coefficient d'évanouissement de canal de la quatrième antenne à la deuxième antenne.

11. Appareil selon la revendication 8, dans lequel le second groupe de coefficients d'égalisation comprend un cinquième coefficient d'égalisation, un sixième coefficient d'égalisation, un septième coefficient d'égalisation et un huitième coefficient d'égalisation ; et

la seconde unité de filtre est conçue spécifiquement pour :

   filtrer le premier créneau temporel du premier signal en utilisant le cinquième coefficient d'égalisation, pour obtenir le premier créneau temporel du cinquième signal ;

   filtrer le conjugué du second créneau temporel du premier signal en utilisant le sixième coefficient d'égalisation, pour obtenir le second créneau temporel du cinquième signal ;

filtrer le premier créneau temporel du deuxième signal en utilisant le septième coefficient d'égalisation, pour obtenir le premier créneau temporel du sixième signal ; et

filtrer le conjugué du second créneau temporel du deuxième signal en utilisant le huitième coefficient d'égalisation, pour obtenir le second créneau temporel du sixième signal.

12. Appareil selon la revendication 7, dans lequel l'unité d'égalisation (212) est conçue spécifiquement pour :
dans le domaine temporel, réaliser un traitement d'égalisation sur le premier signal et le deuxième signal en utilisant le coefficient d'égalisation.

13. Appareil selon la revendication 7, dans lequel l'unité d'égalisation (212) est conçue spécifiquement pour :
dans le domaine de fréquence, réaliser un traitement d'égalisation sur le premier signal et le deuxième signal en utilisant le coefficient d'égalisation.

$s$ → Divider

$s_1$

$s_2$

Orthogonal space-time coding

Third antenna

$s_1$  $-s_2{}^*$

$s_2$  $s_1{}^*$

Fourth antenna

$h_{11}$

$h_{21}$

$h_{12}$

$h_{22}$

First antenna

$y_1$  $y_1'$

$y_2$  $y_2'$

Second antenna

Orthogonal space-time decoding

$\hat{s}_1$

$\hat{s}_2$

FIG. 1

FIG. 2

FIG. 3

Obtain a first signal received by a first antenna and a second signal received by a second antenna — S201

Calculate an equalization coefficient by using a channel fading coefficient obtained by performing channel estimation based on the first signal and the second signal — S202

Perform equalization processing on the first signal and the second signal by using the equalization coefficient — S203

Calculate a decoding coefficient by using a phase noise coefficient obtained by performing channel estimation on a signal obtained after equalization processing — S204

Decode, by using the decoding parameter, the signal obtained after equalization processing, to obtain a transmit signal corresponding to a third antenna and a transmit signal corresponding to a fourth antenna — S205

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070098092 A1


**Non-patent literature cited in the description**

- **S. M. ALAMOUTI.** A Simple Transmit Diversity Technique for Wireless Communications. *IEEE Journal on selected areas in communications,* 01 October 1998, vol. 16 (8), 1454-1455